(19) Europäisches Patentamt
European Patent Office
Office européen des brevets

(11) EP 3 010 115 A1

(12) **EUROPEAN PATENT APPLICATION**
published in accordance with Art. 153(4) EPC

(43) Date of publication:
**20.04.2016 Bulletin 2016/16**

(51) Int Cl.:
**H02J 50/00** (2016.01)

(21) Application number: **14810812.9**

(22) Date of filing: **28.05.2014**

(86) International application number:
**PCT/JP2014/064147**

(87) International publication number:
**WO 2014/199830 (18.12.2014 Gazette 2014/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.06.2013 JP 2013122697**

(71) Applicant: **Nitto Denko Corporation**
**Ibaraki-shi, Osaka 567-8680 (JP)**

(72) Inventors:
• **TSUDA, Hisashi**
**Ibaraki-shi**
**Osaka 5678680 (JP)**
• **HATANAKA, Takezo**
**Ibaraki-shi**
**Osaka 567-8680 (JP)**

(74) Representative: **Müller-Boré & Partner**
**Patentanwälte PartG mbB**
**Friedenheimer Brücke 21**
**80639 München (DE)**

(54) **WIRELESS POWER TRANSMISSION DEVICE AND POWER SUPPLY METHOD OF WIRELESS POWER TRANSMISSION DEVICE**

(57)    In the present invention, the power consumption of a power-supplying module is reduced in the case (standby state) that the power-supplying module and a power-receiving module are not in a power-suppliable region without providing a new device while suppressing the strength of a magnetic field generated in the vicinity of the power-supplying module and the power-receiving module.

The wireless power transmission apparatus is such that the power-supplying module (2), which supplies power using a resonance phenomenon to the power-receiving module (3) from the power-supplying module (2) connected to an AC power source (6), is operated at a power source frequency such that the input impedance ($Z_{in}$) of the power-supplying module (2) in a standby state in which a magnetic field space (Z1, Z2) is not formed is greater than the input impedance (Zin) of the power-supplying module (2) and power-receiving module (3) in a power-supplying state in which a magnetic field space (Z1, Z2) is formed.

FIG.18

(EXAMPLE 2-1)

**Description**

TECHNICAL FIELD

The present invention relates to a wireless power transmission apparatus, and a power-supplying method for the wireless power transmission apparatus.

BACKGROUND ART

Portable electronic devices such as laptop PCs, tablet PCs, digital cameras, mobile phones, portable gaming devices, earphone-type music players, wireless headsets, hearing aids, recorders, which are portable while being used by the user are rapidly increasing in recent years. Many of these portable electronic devices have therein a rechargeable battery, which requires periodical charging. To facilitate the work for charging the rechargeable battery of an electronic device, there are an increasing number of devices for charging rechargeable batteries by using a power-supplying technology (wireless power transmission technology performing power transmission by varying the magnetic field) that performs wireless power transmission between a power-supplying module and a power-receiving module mounted in an electronic device.

As a wireless power transmission technology, there have been known, for example, a technology that performs power transmission by means of resonance phenomenon (magnetic field resonant state) between resonators (coils) provided to the power-supplying device (power-supplying module) and the power-receiving device (power-receiving module)(e.g. see PTL 1).

For example, to perform wireless power transmission by coupling magnetic fields utilizing resonance phenomenon (magnetic field resonant state) between the resonators (coils) of the power-supplying module and the power-receiving module, the power-receiving module needs to be brought close to the power-supplying module so that they are within a distance (power-suppliable region) that enables power supplying from the power-supplying module to the power-receiving module. In this process of use, there is a problem that power is continuously supplied to the power-supplying module, even if the power-supplying module and the power-receiving module are not within the power-suppliable region, so as to prepare for placement of the power-receiving module within the power-suppliable region, i.e., power is wasted (there will be a large amount of power consumed for standing-by).

A suggested measure to address this issue is to provide the power-receiving module or the power-supplying module with a detector (sensor and the like) to detect changes caused by arranging the power-supplying module and the power-receiving module within the power-suppliable region, and to start supplying power to the power-supplying module using the detection result from the detector as a trigger.

For example, PTL 2 describes a power supply system having a structure in which a detector (current/voltage detector 113) is provided to a power-supplying device (power-supplying module) of a power-supplying system, an impedance is derived based on the value of current/voltage measured by the detector, and variation in this impedance (an amount of increase in the impedance and the like: see paragraph [0047] and the like) is compared with a pre-set threshold value to determine whether the power-supplying device (power-supplying module) and a secondary device (power-receiving module) are within the power-suppliable region.

With the provision of the detector to determine whether the power-supplying module and the power-receiving module are within the power-suppliable region, it is surely possible to prevent wasteful power consumption by stopping power supply to the power-supplying module, when the power-supplying module and the power-receiving module are determined as not to be within the power-suppliable region.

CITATION LIST

Patent Literature

PTL 1: Japanese Unexamined Paten Publication No. 239769/2010
PTL 2: Japanese Unexamined Paten Publication No. 62895/2013

SUMMARY OF THE INVENTION

Technical Problem

However, additionally providing a detector as described above is disadvantageous in terms of costs and in terms of downsizing the power-supplying module.

Further, even with the detector, it is necessary to operate the detector at a predetermined time intervals (intermittently), and operating this detector requires power. Therefore, there will be power consumption even when the power-supplying module and the power-receiving module are not within the power-suppliable region (see paragraph [0044] of PTL 2).

Further, according to the above-described wireless power transmission technology, a magnetic field is generated in the vicinity of the resonators of the power-supplying device and the power-receiving device, when the resonators are resonated with each other. Consequently, an Eddy Current occurs due to the magnetic field in a power-supplying device, a rectifier provided inside or outside the power-receiving device, a rechargeable battery, or other electronic components and heat is generated therefrom, with the result that an adverse effect may occur in the rectifier, the rechargeable battery, or the electronic components.

In view of the above problems, it is an object of the present invention to provide a wireless power transmission apparatus and a power-supplying method for the wireless power transmission apparatus, in which power consumption in the power-supplying module is reduced while the power-supplying module and the power-receiving module are not within a power-suppliable region (standby state) while restraining the strength of magnetic field occurring around the power-supplying module and the power-receiving module, without a need of additional component.

TECHNICAL SOLUTION

An aspect of the present invention to achieve the above object is a wireless power transmission apparatus, wherein power is supplied from a power-supplying module connected to a power source to a power-receiving module closely disposed to the power-supplying module using resonance phenomenon, while having a magnetic field occurring around the power-supplying module and a magnetic field occurring around the power-receiving module cancel each other so as to form, in a predetermined position between or around the power-supplying module and the power-receiving module a magnetic field space having a smaller magnetic field strength than that in positions other than the predetermined position; and

the wireless power transmission apparatus is operated at a power-source frequency of the power source such that an input impedance of the power-supplying module in a standby state in which the magnetic field space is not formed is greater than input impedances of the power-supplying module and the power-receiving module in a power-supplying state in which the magnetic field space is formed and power is supplied to the power-receiving module.

In the above structure, the power-receiving module is closely positioned to the power-supplying module to the extent that the magnetic field occurring around the power-supplying module and the magnetic field occurring around the power-receiving module are able to cancel each other. This enables formation of a magnetic field space in a predetermined position between or around the power-supplying module and the power-receiving module, the space having a magnetic field strength smaller than that in positions other than the predetermined position. Consequently, an input impedance of the power-supplying module in a standby state in which the magnetic field space is not formed becomes greater than input impedances of the power-supplying module and the power-receiving module in a power-supplying state in which the magnetic field space is formed. As the result, power consumption in the power-supplying module in the standby state is made lower than that in the power-supplying state.

Another aspect of the present invention is the wireless power transmission apparatus, adapted so that the power-supplying module and the power-receiving module respectively comprise at least a power-supplying resonator and a power-receiving resonator which resonate with each other at a predetermined resonance frequency; and

when power is supplied from the power-supplying resonator to the power-receiving resonator by means of resonance phenomenon, the power-source frequency of the power source is set on a low frequency side of the resonance frequency so that the current in the power-supplying resonator and the current in the power-power-receiving resonator flow in the same direction.

In the structure described above, as the power-supplying module and the power-receiving module are disposed close to each other, the coupling coefficient indicating the strength of coupling between the power-supplying resonator and the power-receiving resonator is increased when power transmission utilizing the resonance phenomenon is performed. When a transmission characteristic "S21" (which is an index of the power transmission efficiency in the power transmission from the power-supplying module to the power-receiving module) is analyzed while the coupling coefficient is high as above, the analyzed waveform of the transmission characteristic "S21" has separate peaks; one on a low frequency side and another on a high frequency side.

By setting the power-source frequency of the power source to a frequency on the low frequency side, the current in the power-supplying resonator and the current in the power-receiving resonator flow in the same direction. With this, as the magnetic field occurring on the outer circumference side of the power-supplying module and the magnetic field occurring on the outer circumference side of the power-receiving module cancel each other out, the influence of the magnetic fields on the outer circumference sides of the power-supplying module and the power-receiving module is restrained, and the magnetic field space having a smaller magnetic field strength than a magnetic field strength in positions other than the outer circumference sides of the power-supplying module and the power-receiving module is formed. Consequently, an input impedance of the power-supplying module in a standby state in which the magnetic field space is not formed on the outer circumference sides of the power-supplying module and the power-receiving module becomes greater than input impedances of the power-supplying module and the power-receiving module in a power-supplying state in which the magnetic field space is formed on the outer circumference sides of the power-supplying module and the power-receiving module. As the result, power consumption in the power-supplying module in the standby state is made lower than that in the power-supplying state.

Another aspect of the present invention is the wireless power transmission apparatus, adapted so that the power-supplying module and the power-receiving module respectively comprise at least a power-supplying resonator and a power-receiving resonator which resonate with each other at a predetermined resonance frequency; and
when power is supplied from the power-supplying resonator to the power-receiving resonator by means of resonance phenomenon, the power-source frequency of the power source is set on a high frequency side of the resonance frequency so that the current in the power-supplying resonator and the current in the power-power-receiving resonator flow in directions opposite to each other.

In the structure described above, as the power-supplying module and the power-receiving module are disposed close to each other, the coupling coefficient indicating the strength of coupling between the power-supplying resonator and the power-receiving resonator is increased when power transmission utilizing the resonance phenomenon is performed. When a transmission characteristic "S21" (which is an index of the power transmission efficiency in the power transmission from the power-supplying module to the power-receiving module) is analyzed while the coupling coefficient is high as above, the analyzed waveform of the transmission characteristic "S21" has separate peaks; one on a low frequency side and another on a high frequency side.

By setting the power-source frequency of the power source to a frequency on the high frequency side, the current in the power-supplying resonator and the current in the power-receiving resonator flow in directions opposite to each other. With this, as the magnetic field occurring on the inner circumference side of the power-supplying module and the magnetic field occurring on the inner circumference side of the power-receiving module cancel each other out, the influence of the magnetic fields on the inner circumference sides of the power-supplying module and the power-receiving module is restrained, and the magnetic field space having a smaller magnetic field strength than a magnetic field strength in positions other than the inner circumference sides of the power-supplying module and the power-receiving module is formed. Consequently, an input impedance of the power-supplying module in a standby state in which the magnetic field space is not formed on the inner circumference sides of the power-supplying module and the power-receiving module becomes greater than input impedances of the power-supplying module and the power-receiving module in a power-supplying state in which the magnetic field space is formed on the inner circumference sides of the power-supplying module and the power-receiving module. As the result, power consumption in the power-supplying module in the standby state is made lower than that in the power-supplying state.

Another aspect of the present invention is the wireless power transmission apparatus, adapted so that the power-supplying module comprises a power-supplying coil, a power-supplying resonator, and a power-receiving resonator, and the power-receiving module comprises a power-receiving coil.

With the structure described above, the input impedance of the power-supplying module in the standby state is configured as an input impedance of the power-supplying module having the power-supplying coil, the power-supplying resonator, and the power-receiving resonator.

Therefore, the power-supplying module structured by at least the three elements, i.e., the power-supplying coil, the power-supplying resonator, and the power-receiving resonator, has more factors to determine the input impedance of the power-supplying module. An increase in the number of factors to determine the input impedance of the power-supplying module means an increase in the number of factors to determine the relation of the input impedance of the power-supplying module to the power-source frequency of the power source, and hence a higher freedom is achieved in designing the power-supplying module.

Further, the power-receiving module including a power-receiving coil is made compact.

Another aspect of the present invention is the wireless power transmission apparatus, adapted so that the power-supplying module comprises a power-supplying coil and a power-supplying resonator, and the power-receiving module comprises a power-receiving resonator and a power-receiving coil.

With the structure described above, the input impedance of the power-supplying module in the standby state is configured as an input impedance of the power-supplying module having the power-supplying coil and the power-supplying resonator.

Therefore, the power-supplying module structured by at least the two elements, i.e., the power-supplying coil and the power-supplying resonator, has more factors to determine the input impedance of the power-supplying module. An increase in the number of factors to determine the input impedance of the power-supplying module means an increase in the number of factors to determine the relation of the input impedance of the power-supplying module to the power-source frequency of the power source, and hence a higher freedom is achieved in designing the power-supplying module.

Further, the power-receiving module including a power-receiving coil is made compact.

Another aspect of the present invention is the wireless power transmission apparatus, adapted so that the power-supplying module comprises a power-supplying coil, and the power-receiving module comprises a power-supplying resonator, a power-receiving resonator, and a power-receiving coil.

With the structure described above, the input impedance of the power-supplying module in the standby state is configured as an input impedance of the power-supplying module having the power-supplying coil and the power-supplying resonator.

Therefore, in the power-supplying module structured essentially by a single element, i. e. , the power-supplying coil, the factors to determine the input impedance of the power-supplying module is simplified to one. Being able to simplify the factors to determine the input impedance of the power-supplying module to one factor means that the factors to determine the relation of the input impedance of the power-supplying module to the power-source frequency of the power source are simplified to one, and hence designing of the power-supplying module is made simple.

Another aspect of the present invention to achieve the above object is a power-supplying method for a wireless power transmission apparatus, wherein power is supplied from a power-supplying module connected to a power source to a power-receiving module closely disposed to the power-supplying module using resonance phenomenon, while having a magnetic field occurring around the power-supplying module and a magnetic field occurring around the power-receiving module cancel each other so as to form, in a predetermined position between or around the power-supplying module and the power-receiving module a magnetic field space having a smaller magnetic field strength than that in positions other than the predetermined position, the method comprising

adjusting a power-source frequency of the power source to a band such that an input impedance of the power-supplying module in a standby state in which the magnetic field space is not formed becomes greater than input impedances of the power-supplying module and the power-receiving module in a power-supplying state in which the magnetic field space is formed and power is supplied to the power-receiving module.

With the method described above, the power-receiving module is closely positioned to the power-supplying module to the extent that the magnetic field occurring around the power-supplying module and the magnetic field occurring around the power-receiving module are able to cancel each other. This enables formation of a magnetic field space in a predetermined position between or around the power-supplying module and the power-receiving module, the space having a magnetic field strength smaller than that in positions other than the predetermined position. Consequently, an input impedance of the power-supplying module in a standby state in which the magnetic field space is not formed becomes greater than input impedances of the power-supplying module and the power-receiving module in a power-supplying state in which the magnetic field space is formed. As the result, power consumption in the power-supplying module in the standby state is made lower than that in the power-supplying state.

## ADVANTAGEOUS EFFECTS

There is provided a wireless power transmission apparatus and a power-supplying method for the wireless power transmission apparatus, in which power consumption in the power-supplying module is reduced while the power-supplying module and the power-receiving module are not within a power-suppliable region (standby state) while restraining the strength of magnetic field occurring around the power-supplying module and the power-receiving module, without a need of additional component.

## DESCRIPTION OF THE DRAWINGS

[FIG. 1] FIG.1 is an explanatory diagram of a charger with a power-supplying module mounted therein and a wireless headset having a power-receiving module mounted therein.

[FIG. 2] FIG.2 is an explanatory diagram of the power-supplying module and the power-receiving module in a standby state.

[FIG. 3] FIG.3 is an explanatory diagram illustrating the power-supplying module and the power-receiving module in the power-supplying state, in the form of equivalent circuit.

[FIG. 4] FIG. 4 is an explanatory diagram showing a position where the magnetic field space is formed.

[FIG. 5] FIG. 5 is an explanatory diagram of a wireless power transmission apparatus connected to a network analyzer.

[FIG. 6] FIG. 6 is a graph indicating a relation of the transmission characteristic "S21" to the power-source frequency.

[FIG. 7] FIG. 7(A) is an explanatory diagram of an inphase resonance mode. FIG. 7(B) is a magnetic field vector diagram in the inphase resonance mode.

[FIG. 8] FIG. 8 (A) is a magnetic field strength distribution, when viewing from an aspect of the power-supplying module and the power-receiving module in the inphase resonance mode.

FIG.8(B) is a cross sectional view of the power-supplying module and the power-receiving module, taken along A-A of FIG. 8(A).

[FIG. 9] FIG. 9 (A) is an explanatory diagram of an antiphase resonance mode. FIG. 9(B) is a magnetic field vector diagram in the antiphase resonance mode.

[FIG. 10] FIG. 10 (A) is a magnetic field strength distribution, when viewing from an aspect of the power-supplying module and the power-receiving module in the antiphase resonance mode.

FIG.10(B) is a cross sectional view of the power-supplying module and the power-receiving module, taken along A-A of FIG. 10(A).

[FIG. 11] FIG.11 is an explanatory diagram illustrating a power-supplying module related to Example 1-1, in the form of equivalent circuit.

[FIG. 12] FIG. 12 is a graph showing analysis result related to Example 1-1.

[FIG. 13] FIG.13 is an explanatory diagram illustrating a power-supplying module related to Example 1-2, in the form of equivalent circuit.

[FIG. 14] FIG. 14 is a graph showing analysis result related to Example 1-2.

[FIG. 15] FIG.15 is an explanatory diagram illustrating a power-supplying module related to Example 1-3, in the form of equivalent circuit.

[FIG. 16] FIG. 16 is a graph showing analysis result related to Example 1-3.

[FIG. 17] FIG.17 is an explanatory diagram illustrating a power-supplying module related to Example 2-1, in the form of equivalent circuit.

[FIG. 18] FIG. 18 is a graph showing analysis result related to Example 2-1.

[FIG. 19] FIG.19 is an explanatory diagram illustrating a power-supplying module related to Example 2-2, in the form of equivalent circuit.

[FIG. 20] FIG. 20 is a graph showing analysis result related to Example 2-2.

[FIG. 21] FIG.21 is an explanatory diagram illustrating a power-supplying module related to Example 2-3, in the form of equivalent circuit.

[FIG. 22] FIG. 22 is a graph showing analysis result related to Example 2-3.

[FIG. 23] FIG. 23 is a flowchart of designing a charger with a power-supplying module mounted therein and a wireless headset having a power-receiving module mounted therein.

DESCRIPTION OF EMBODIMENTS

The following describes an embodiment of a wireless power transmission apparatus 1 used in wireless power transmission, and power-supplying method for the wireless power transmission apparatus 1, according to the present invention.

(Embodiment)

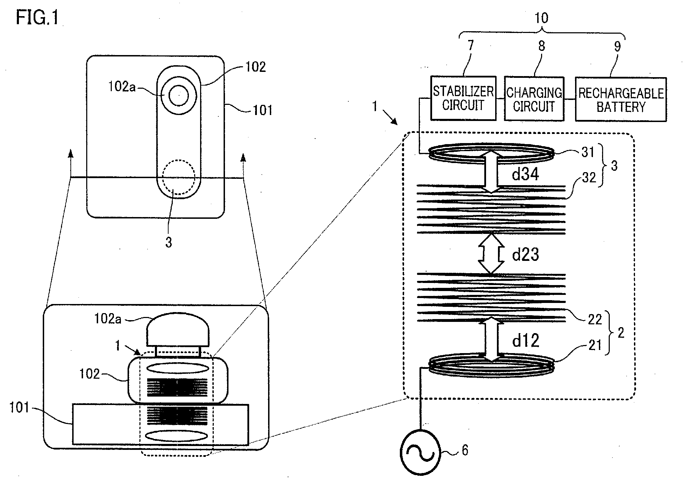

As an example of a wireless power transmission apparatus 1 including, as an essential component, a power-supplying module 2 and a power-receiving module 3, whereby wireless power transmission is realized, a charger 101 having a power-supplying module 2 and a wireless headset 102 as shown in FIG. 1 are described in the present embodiment.

(Structures of Charger 101 and Wireless Headset 102)

As shown in FIG. 1, a charger 101 includes a power-supplying coil 21 and a power-supplying module 2 having a power-supplying resonator 22. A wireless headset 102 includes a earphone speaker unit 102a, a power-receiving coil 31, and a power-receiving module 3 having a power-receiving resonator 32. The power-supplying coil 21 of the power-supplying module 2 is connected to an AC power source 6 having an oscillation circuit with the power-source frequency of the power to be supplied to the power-supplying module 2 to a predetermined value. The power-receiving coil 31 of the power-receiving module 3 is connected to a rechargeable battery 9 via a charging circuit 8 configured to prevent overcharge and a stabilizer circuit 7 configured to rectify the AC power received. For the sake of convenience, FIG. 1 illustrates the stabilizer circuit 7, the charging circuit 8, and the rechargeable battery 9 outside the power-receiving module 3; however, these are actually disposed on the inner circumference side of the solenoid power-receiving coil 31 and the power-receiving resonator 32. Further, as shown in FIG. 1, the stabilizer circuit 7, the charging circuit 8, and the rechargeable battery 9 of the present embodiment are a power-supplied electronic device 10 which is the final destination of the supplied power. The power-supplied electronic device 10 is a term collectively referring to all the devices connected to the power-receiving module 3, where the power is supplied. Further, the power-supplying module 2 and the power-receiving module 3 are the wireless power transmission apparatus 1.

The charger 101 has a not-shown accommodation groove for accommodating the wire, which has a shape corresponding to the wireless headset 102. By accommodating the wireless headset 102 to this accommodating groove of the charger 101, the wireless headset 102 is positioned in such a manner that the power-supplying module 2 of the charger 101 and the power-receiving module 3 of the wireless headset 102 face each other.

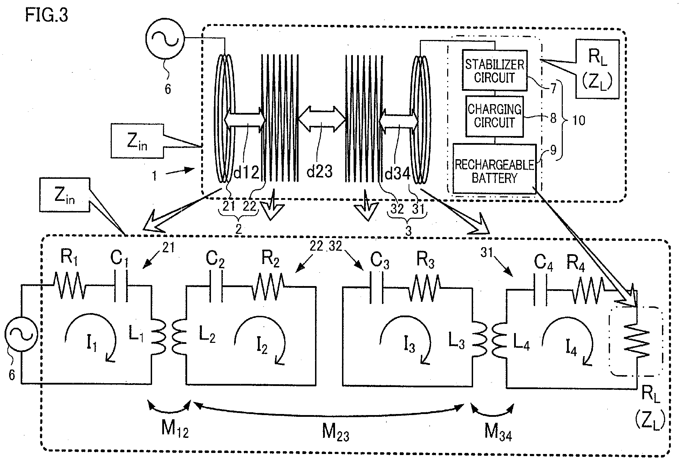

The power-supplying coil 21 plays a role of supplying power obtained from the AC power source 6 to the power-supplying resonator 22 by means of electromagnetic induction. As shown in FIG. 3, the power-supplying coil 21 is constituted by an RLC circuit whose elements include a resistor $R_1$, a coil $L_1$, and a capacitor $C_1$. The coil $L_1$ part is a solenoid coil formed by winding 18 times a copper wire material (coated by insulation film) having a wire diameter of 0.4 mm$\phi$, with its coil diameter being 15 mm$\phi$. The total impedance of a circuit element constituting the power-supplying coil 21 is $Z_1$. In the present embodiment, the $Z_1$ is the total impedance of the RLC circuit (circuit element) constituting the power-supplying coil 21, which includes the resistor $R_1$, the coil $L_1$, and the capacitor $C_1$. Further, the current that flows in the power-supplying coil 21 is $I_1$.

The power-receiving coil 31 plays roles of receiving the power having been transmitted as a magnetic field energy from the power-supplying resonator 22 to the power-receiving resonator 32, by means of electromagnetic induction, and supplying the power received to the rechargeable battery 9 via the stabilizer circuit 7 and the charging circuit 8. As shown in FIG. 3, the power-receiving coil 31, similarly to the power-supplying coil 21, is constituted by an RLC circuit whose elements include a resistor $R_4$, a coil $L_4$, and a capacitor $C_4$. The coil $L_4$ part is a solenoid coil formed by winding 18 times a copper wire material (coated by insulation film) having a wire diameter of 0.4 mm$\phi$, with its coil diameter being 15 mm$\phi$. The total impedance of a circuit element constituting the power-receiving coil 31 is $Z_4$. In the present embodiment, the $Z_4$ is the total impedance of the RLC circuit (circuit element) constituting the power-receiving coil 31, which includes the resistor $R_4$, the coil $L_4$, and the capacitor $C_4$. The total impedance of the power-supplied electronic device 10 connected to the power-receiving coil 31 is $Z_L$. However, as shown in FIG. 3, the total load impedance of the stabilizer circuit 7, the charging circuit 8, and the rechargeable battery 9 (power-supplied electronic devices 10) connected to the power-receiving coil 31 is implemented in the form of a resistor $R_L$ (corresponding to $Z_L$) in the present embodiment for the sake of convenience. Further, the current that flows in the power-receiving coil 31 is $I_4$.

As shown in FIG. 3, the power-supplying resonator 22 is constituted by an RLC circuit whose elements include a resistor $R_2$, a coil $L_2$, and a capacitor $C_2$. Further, as shown in FIG. 3, the power-receiving resonator 32 is constituted by an RLC circuit whose elements include a resistor $R_3$, a coil $L_3$, and a capacitor $C_3$. The power-supplying resonator 22 and the power-receiving resonator 32 each serves as a resonance circuit and plays a role of creating a magnetic field resonant state. The magnetic field resonant state (resonance phenomenon) here is a phenomenon in which two or more coils resonate with each other at a resonance frequency band. The total impedance of a circuit element constituting the power-supplying resonator 22 is $Z_2$. In the present embodiment, the $Z_2$ is the total impedance of the RLC circuit (circuit element) constituting the power-supplying resonator 22, which includes the resistor $R_2$, the coil $L_2$, and the capacitor $C_2$. The total impedance of a circuit element constituting the power-receiving resonator 32 is $Z_3$. In the present embodiment, the $Z_3$ is the total impedance of the RLC circuit (circuit element) constituting the power-receiving resonator 32, which includes the resistor $R_3$, the coil $L_3$, and the capacitor $C_3$. Further, the current that flows in the power-supplying resonator 22 is $I_2$, and the current that flows in the power-receiving resonator 32 is $I_3$.

In the RLC circuit which is the resonance circuit in each of the power-supplying coil 21, the power-supplying resonator 22, the power-receiving resonator 32, and the power-receiving coil 31, the resonance frequency is f which is derived from (Formula 1) below, where the inductance is L and the capacity of capacitor is C. In the present embodiment, the resonance frequency of the power-supplying coil 21, the power-supplying resonator 22, the power-receiving coil 31, and the power-receiving resonator 32 is set to 1.0 MHz

$$f = \frac{1}{2\pi\sqrt{LC}}$$

..... (Formula 1)

The power-supplying resonator 22 and the power-receiving resonator 32 are each a solenoid coil formed by winding 18 times a copper wire material (coated by insulation film) having a wire diameter of 0.4 mm$\phi$, with its coil diameter being 15 mm$\phi$. The resonance frequency of the power-supplying resonator 22 and that of the power-receiving resonator 32 are matched with each other, as described above. The power-supplying resonator 22 and the power-receiving resonator 32 may be a spiral coil or a solenoid coil as long as it is a resonator using a coil.

In regard to the above, the distance between the power-supplying coil 21 and the power-supplying resonator 22 is denoted as d12, the distance between the power-supplying resonator 22 and the power-receiving resonator 32 is denoted as d23, and the distance between the power-receiving resonator 32 and the power-receiving coil 31 is denoted as d34 (see FIG. 1).

Further, as shown in FIG. 3, a mutual inductance between the coil $L_1$ of the power-supplying coil 21 and the coil $L_2$ of the power-supplying resonator 22 is $M_{12}$, a mutual inductance between the coil $L_2$ of the power-supplying resonator 22 and the coil $L_3$ of the power-receiving resonator 32 is $M_{23}$, and a mutual inductance between the coil $L_3$ of the power-receiving resonator 32 and the coil $L_4$ of the power-receiving coil 31 is $M_{34}$. Further, in the power-supplying module 2 and the power-receiving module 3, a coupling coefficient between the coil $L_1$ and the coil $L_2$ is denoted as $K_{12}$, a coupling coefficient between the coil $L_2$ and the coil $L_3$ is denoted as $K_{23}$, and a coupling coefficient between the coil $L_3$ and the coil $L_4$ is denoted as $K_{34}$.

It should be noted that the resistance value, inductance, capacity of capacitor, and the coupling coefficients $K_{12}$, $K_{23}$, $K_{34}$ in the $R_1$, $L_1$, and $C_1$ of the RLC circuit of the power-supplying coil 21, the $R_2$, $L_2$, and $C_2$ of the RLC circuit of the power-supplying resonator 22, the $R_3$, $L_3$, and $C_3$ of the RLC circuit of the power-receiving resonator 32, the $R_4$, $L_4$, $C_4$ of the RLC circuit of the power-receiving coil 31 are set as parameters variable at the stage of designing and manufacturing.

With the power-supplying module 2 and the power-receiving module 3, when the resonance frequency of the power-supplying resonator 22 and the resonance frequency of the power-receiving resonator 32 match with each other, a magnetic field resonant state is created between the power-supplying resonator 22 and the power-receiving resonator 32. When a magnetic field resonant state is created between the power-supplying resonator 22 and the power-receiving resonator 32 by having these resonators resonating with each other, power is transmitted from the power-supplying resonator 22 to the power-receiving resonator 32 as magnetic field energy. Therefore, the power is transmitted wirelessly from the charger 101 having the power-supplying module 2 to the wireless headset 102 having the power-receiving module 3, and the rechargeable battery 9 in the wireless headset 102 is charged.

(Formation of Magnetic Field Space with Weakened Magnetic Field Strength)

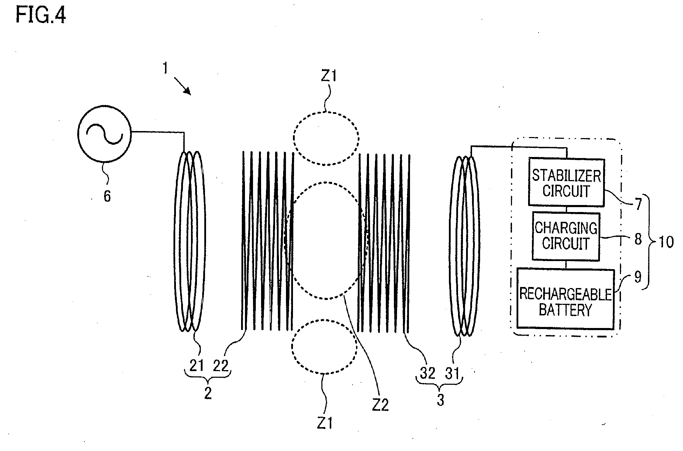

In the present embodiment, a magnetic field space with weakened magnetic field strength is formed to restrain the strength of the magnetic field occurring around the power-supplying module 2 and the power-receiving module 3. Specifically as shown in FIG. 4, when the power is supplied from the power-supplying resonator 22 of the power-supplying module 2 to the power-receiving resonator 32 of the power-receiving module 3 by utilizing resonance phenomenon, magnetic field spaces Z1 and Z2 are formed at desired positions between the power-supplying resonator 22 and the power-receiving resonator 32. These magnetic field spaces Z1 and Z2 have magnetic field strengths lower than the magnetic field strengths at positions other than the desired positions. As detailed later, the desired positions locate on the inner circumference side (magnetic field space Z2) or on the outer circumference side (magnetic field space Z1) of the coil (power-supplying resonator 22) of the power-supplying module 2 or the coil (power-receiving resonator 32) of the power-receiving module 3.

(Positions where Magnetic Field Spaces are Formed)

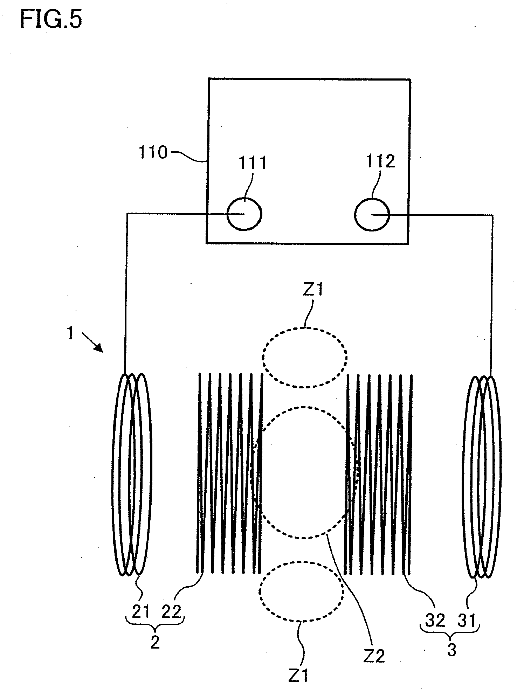

The following describes positions where the magnetic field spaces are formed. As shown in FIG. 5, the wireless power transmission apparatus 1 (the power-supplying module 2 and power-receiving module 3) integrated into the charger 101 and the wireless headset 102 are connected to a network analyzer 110 (E5061B produced by Agilent Technologies, Inc. in the present embodiment). Note that, the magnetic field space Z is analyzed by an electromagnetic field analysis and magnetic field strengths are indicated in different color tones.

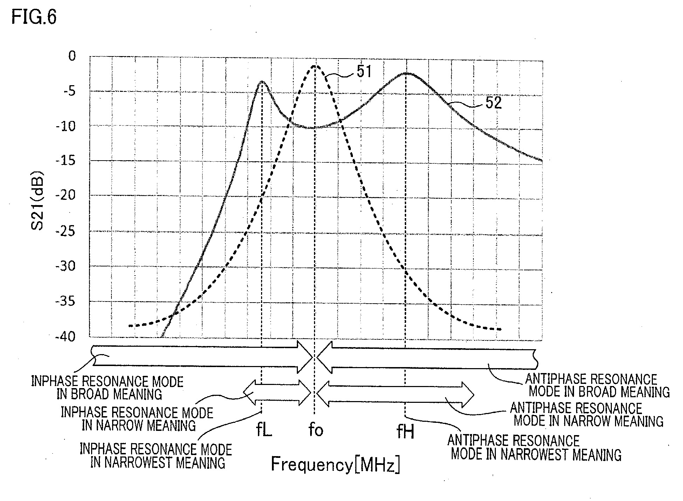

First, using the network analyzer 110, the transmission characteristic "S21" is measured at various power-source frequencies of the AC power supplied to the power-supplying module 2. In this regard, as shown in the graph of FIG. 6, the horizontal axis indicates the power-source frequencies of the AC power output from the output terminal 111, and the vertical axis indicates the transmission characteristic "S21".

The transmission characteristic "S21" is signals measured by a network analyzer 110 connected to the power-supplying module 2 and the power-receiving module 3, and is indicated in decibel. The greater the value, the higher the power transmission efficiency. Further, the power transmission efficiency means a ratio of the power output to the input terminal 112 for the power supplied from the output terminal 111 to the power-supplying module 2, while the wireless power transmission apparatus 1 is connected to the network analyzer 110. In other words, the higher the transmission characteristic "S21" is, the higher the power transmission efficiency is.

The present embodiment deals with a case where the setting is such that the analyzed waveform of the transmission characteristic "S21" (solid line 52 of FIG. 6) has a double-hump characteristic in which there are separate peaks: one on a low frequency side and another on a high frequency side, as shown in FIG. 6. Of the separate peaks, the frequency on the high frequency side is indicated as fH, and the frequency on the low frequency side is indicated as fL.

zThe transmission characteristic "S21" relative to the power-source frequency of the power supplied to the wireless power transmission apparatus 1 may have either single-hump or double-hump characteristic, depending on the strength of coupling (magnetic coupling) by the magnetic field between the power-supplying module 2 and the power-receiving module 3. The single-hump characteristic means the transmission characteristic "S21" relative to the power-source frequency has a single peak which occurs in the resonance frequency band (f0) (See dotted line 51 FIG. 6). The double-hump characteristic on the other hand means the transmission characteristic "S21" relative to the power-source frequency has two peaks, one of the peaks occurring in a power-source frequency band lower than the resonance frequency (fL), and the other occurring in a power-source frequency band higher than the resonance frequency (fH) (See solid line 52 in FIG. 6 relating to the analysis result of the present embodiment) . The double-hump characteristic, to be more specific, means that the reflection characteristic "S11" measured with the network analyzer 110 connected to the power-supplying module 2 and the power-receiving module 3 has two peaks. Therefore, even if the transmission characteristic "S21" relative to the power-source frequency appears to have a single peak, the transmission characteristic "S21" has a double-hump characteristic if the reflection characteristic "S11" measured has two peaks.

When the setting is such that transmission characteristic "S21" has a single-hump characteristic, the transmission characteristic "S21" of the power-supplying module 2 and the power-receiving module 3 is maximized (the power transmission efficiency is maximized) when the power-source frequency is at a resonance frequency band of $f_0$, as shown by the broken line 51 of FIG. 6.

On the other hand, in the power-supplying module 2 and the power-receiving module 3 having a double-hump characteristic as in the present embodiment, the transmission characteristic "S21" is maximized in a power-source frequency band (fL) lower than the resonance frequency fo, and in power-source frequency band (fH) higher than the resonance frequency fo, as indicated by the solid line 52 of FIG. 6. It should be noted that, in general, if the distance between a power-supplying resonator 22 and a power-receiving resonator 32 is the same, the maximum value of the transmission characteristic "S21" having the double-hump characteristic (the value of the transmission characteristic "S21" at fL or fH) is lower than the value of the maximum value of the transmission characteristic "S21" having the single-hump characteristic (value of the transmission characteristic "S21" at $f_0$).

It should be noted that, in the present example, the power-supplying resonator 22 and the power-receiving resonator 32 are disposed close to each other to the extent that the analyzed waveform of the transmission characteristic "S21" has separate peaks; one on a low frequency side and another on a high frequency side. To achieve the transmission characteristic "S21" of the wireless power transmission apparatus 1 having the double-hump characteristic, variable parameters configuring the power-supplying module 2 and the power-receiving module 3 are suitably set. Such variable parameters include: the resistance value, inductance, capacity of capacitor, and the coupling coefficients $K_{12}$, $K_{23}$, $K_{34}$ in the $R_1$, $L_1$, and $C_1$ of the RLC circuit of the power-supplying coil 21, the $R_2$, $L_2$, and $C_2$ of the RLC circuit of the power-supplying resonator 22, the $R_3$, $L_3$, and $C_3$ of the RLC circuit of the power-receiving resonator 32, and the $R_4$, $L_4$, $C_4$ of the RLC circuit of the power-receiving coil 31; and distances d12, d23, and d34 between coils.

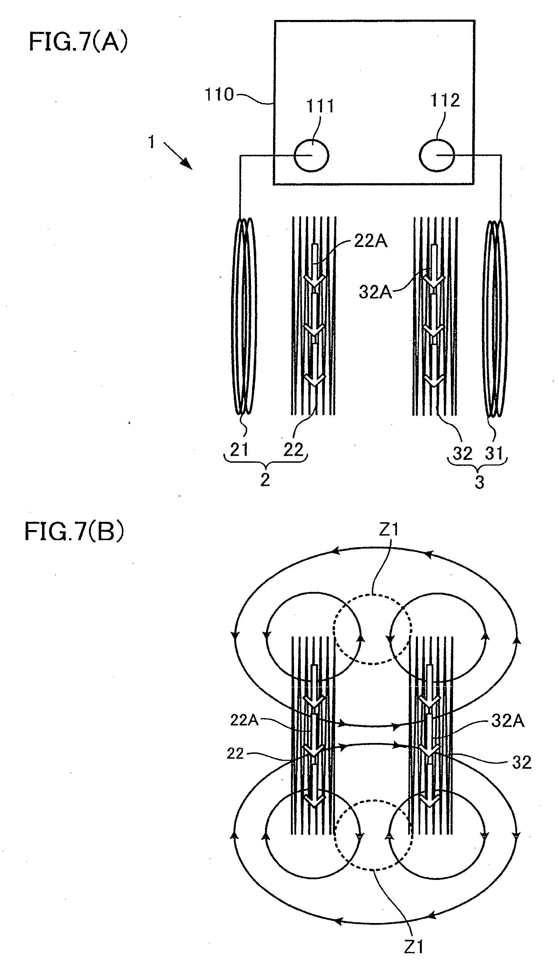

when the analyzed waveform of the transmission characteristic "S21" indicates double-hump characteristic, if the power-source frequency of the AC power supplied to the power-supplying module 2 is set to a lower frequency band than the resonance frequency *fo*, the power-supplying resonator 22 and the power-receiving resonator 32 are resonant with each other in inphase, and the current (22A) in the power-supplying resonator 22 and the current (32A) in the power-receiving resonator 32 both flow in the same direction, as shown in FIG. 7 (A) . As a result, as shown in the magnetic field vector diagram in FIG. 7(B), because the magnetic field generated on the outer circumference side of the power-supplying resonator 22 and the magnetic field generated on the outer circumference side of the power-receiving resonator 32 cancel each other out, the magnetic field space Z1 each having a lower magnetic field strength than the magnetic field strengths in positions not on the outer circumference sides of the power-supplying resonator 22 and the power-receiving resonator 32 (e.g., the magnetic field strengths on the inner circumference sides of the power-supplying resonator 22 and the power-receiving resonator 32) are formed on the outer circumference sides of the power-supplying resonator 22 and the power-receiving resonator 32, as the influence of the magnetic fields is lowered. It should be noted that the resonance state in which the current in the coil (power-supplying resonator 22) of the power-supplying module 2 and the current in the coil (power-receiving resonator 32) of the power-receiving module 3 both flow in the same direction is referred to as inphase resonance mode. Further, the inphase resonance mode in a broader meaning is defined as a setting of the power-source frequency of the AC power supplied to the power-supplying module 2, to a lower frequency band than the resonance frequency *fo,* when the analyzed waveform of the transmission characteristic "S21" indicates double-hump characteristic in the inphase resonance mode (see FIG. 6). On the other hand, the inphase resonance mode in a narrower meaning is defined as a setting of the power-source frequency of the AC power to the power-supplying module 2, to a frequency band nearby the peak (fL) occurring in a frequency band lower than the resonance frequency fo (in a range where the value of the "S21" becomes approximately -10 dB or higher) in the analyzed waveform of the "S21" (see FIG. 6). It should be noted that, of the inphase resonance mode in its narrower meaning, a setting of the of the power-source frequency of the AC power to the power-supplying module 2, to the peak (fL) occurring in a frequency band lower than the resonance frequency *fo* in the analyzed waveform of the "S21" is the inphase resonance mode in the narrowest meaning.

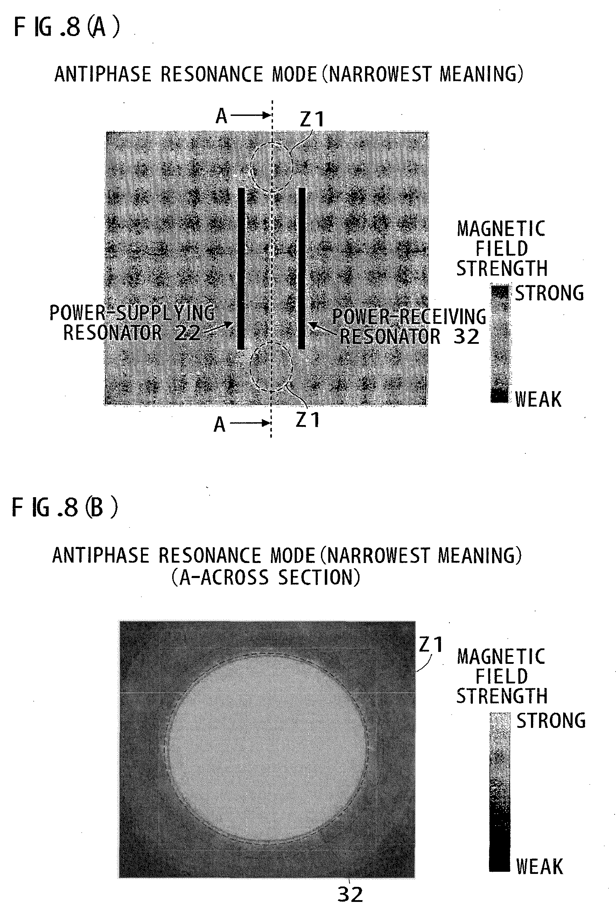

In FIGs. 8 (A) (B), the magnetic field strength distribution around the power-supplying resonator 22 and the power-receiving resonator 32 in the inphase resonance mode in the narrowest meaning is shown as an analysis result based on the electromagnetic field analysis and displayed such that magnetic field strengths are shown in different color tones. This magnetic field strength distribution shown in FIGs. 8 (A) (B) demonstrates that, on account of lowered influence of the magnetic fields, a magnetic field space Z1 having a relatively low magnetic field strength is formed on the outer circumference sides of the power-supplying resonator 22 and the power-receiving resonator 32. It should be noted that FIG. 8 (A) shows distribution of magnetic field strength when the power-supplying module 2 and the power-receiving module 3 are viewed from a side, FIG. 8 (B) is a cross sectional view of the power-supplying module 2 and the power-receiving module 3, taken along A-A of FIG. 8(A).

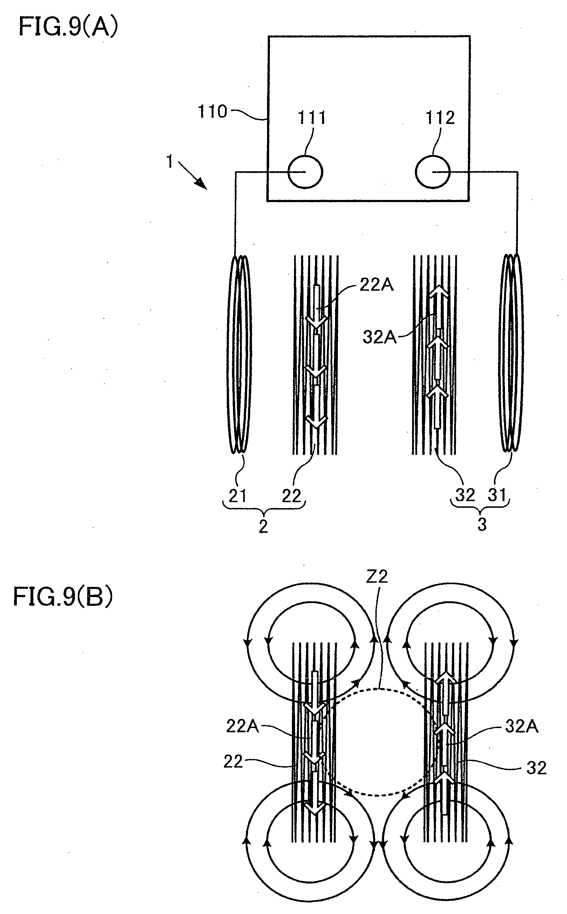

when the analyzed waveform of the transmission characteristic "S21" indicates double-hump characteristic, if the power-source frequency of the AC power supplied to the power-supplying module 2 is set to a higher frequency band than the resonance frequency fo, the power-supplying resonator 22 and the power-receiving resonator 32 are resonant with each other in antiphase, and the current (22A) in the power-supplying resonator 22 and the current (32A) in the power-receiving resonator 32 flow in directions opposite to each other, as shown in FIG. 9 (A) . As a result, as the magnetic field vector diagram in FIG. 9(B) shows, because the magnetic field generated on the inner circumference side of the power-supplying resonator 22 and the magnetic field generated on the inner circumference side of the power-receiving resonator 32 cancel each other out, the magnetic field space Z2 having a lower magnetic field strength than the magnetic field strengths in positions not on the inner circumference sides of the power-supplying resonator 22 and the power-receiving resonator 32 (e.g., the magnetic field strengths on the outer circumference sides of the power-supplying resonator 22 and the power-receiving resonator 32) is formed on the inner circumference sides of the power-supplying resonator 22 and the power-receiving resonator 32, as the influence of the magnetic fields is lowered. The resonance state in which the current in the coil (power-supplying resonator 22) of the power-supplying module 2 and the current in the coil (power-receiving resonator 32) of the power-receiving module 3 flow opposite directions to each other is referred to as antiphase resonance mode. Further, the antiphase resonance mode in a broader meaning is defined as a setting of the power-source frequency of the AC power supplied to the power-supplying module 2, to a higher frequency band than the resonance frequency fo, when the analyzed waveform of the transmission characteristic "S21" indicates double-hump characteristic in the antiphase resonance mode (see FIG. 6). On the other hand, the antiphase resonance mode in a narrower meaning is defined as a setting of the power-source frequency of the AC power to the power-supplying module 2, to a frequency band nearby the peak (fH) occurring in a frequency band higher than the resonance frequency *fo* (in a range where the value of the "S21" becomes approximately -10 dB or higher) in the analyzed waveform of the "S21" (see FIG. 6). It should be noted that, of the antiphase resonance mode in its narrower meaning, a setting of the of the power-source frequency of the AC power to the power-supplying module 2, to the peak (fH) occurring in a frequency band higher than the resonance frequency *fo* in the analyzed waveform of the "S21" is the antiphase resonance mode in the narrowest meaning.

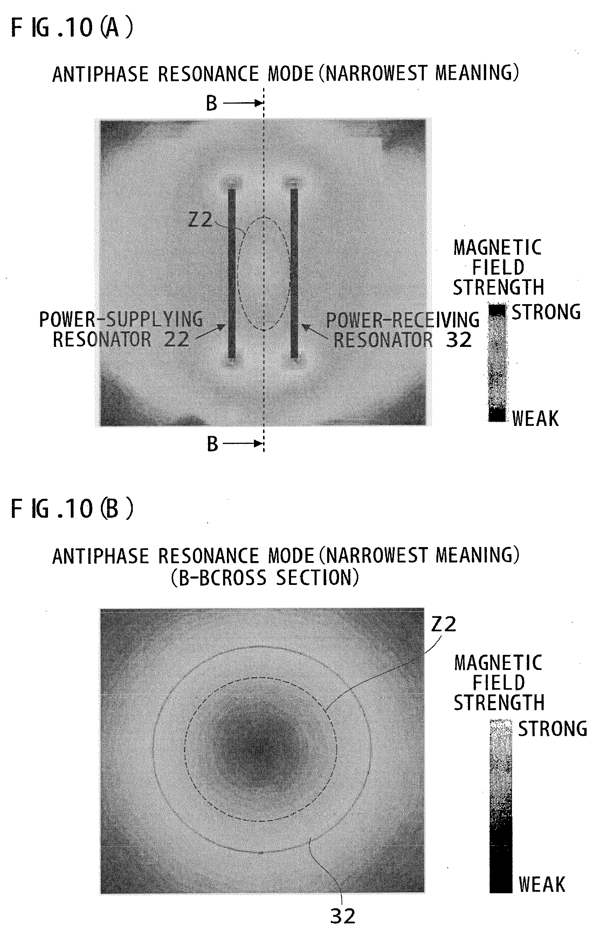

In FIGs. 10 (A) (B), the magnetic field strength distribution around the power-supplying resonator 22 and the power-receiving resonator 32 in the antiphase resonance mode in the narrowest meaning is shown as an analysis result based on the electromagnetic field analysis and displayed such that magnetic field strengths are shown in different color tones. This magnetic field strength distribution shown in FIGs. 10 (A) (B) demonstrates that, on account of lowered influence of the magnetic fields, a magnetic field space Z2 having a relatively low magnetic field strength is formed on the inner circumference sides of the power-supplying resonator 22 and the power-receiving resonator 32. It should be noted that FIG. 10 (A) shows distribution of magnetic field strength when the power-supplying module 2 and the power-receiving module 3 are viewed from a side, FIG. 10 (B) is a cross sectional view of the power-supplying module 2 and the power-receiving module 3, taken along B-B of FIG. 10(A).

In the wireless power transmission apparatus 1 (power-supplying module 2 and the power-receiving module 3), the transmission characteristic "S21" relative to the power-source frequency is set to have a double-hump characteristic. Further, the power-source frequency of the AC power to the power-supplying module 2 is set to the inphase resonance mode, when the power is supplied from the power-supplying resonator 22 to the power-receiving resonator 32 by means of resonance phenomenon. This way, the current in the power-supplying resonator 22 and the current in the power-receiving resonator 32 both flow in the same direction. Therefore, the magnetic field occurring on the outer circumference side of the power-supplying resonator 22 and the magnetic field occurring on the outer circumference side of the power-receiving resonator 32 cancel each other. This reduces the influence of the magnetic fields on the outer circumference sides of the power-supplying resonator 22 and the power-receiving resonator 32, with the result that a magnetic field space Z1 having a lower magnetic field strength than that other than the outer circumference sides of the power-supplying resonator 22 and the power-receiving resonator 32 is formed.

When a stabilizer circuit 7, a charging circuit 8, a rechargeable battery 9, and the like desired to have less influence of the magnetic field is placed in this magnetic field space Z1, occurrence of Eddy Current attributed to the magnetic field is restrained or prevented. This restrains negative effects due to generation of heat.

Further, in the wireless power transmission apparatus 1 (power-supplying module 2 and the power-receiving module 3), the transmission characteristic "S21" relative to the power-source frequency is set to have a double-hump characteristic. Further, the frequency of the AC power to the power-supplying module 2 is set to the antiphase resonance mode, when the power is supplied from the power-supplying resonator 22 to the power-receiving resonator 32 by means of resonance phenomenon. This way, the current in the power-supplying resonator 22 and the current in the power-receiving resonator 32 both flow in directions opposite to each other. Therefore, the magnetic field occurring on the inner circumference side of the power-supplying resonator 22 and the magnetic field occurring on the inner circumference side of the power-receiving resonator 32 cancel each other. This reduces the influence of the magnetic fields on the inner circumference sides of the power-supplying resonator 22 and the power-receiving resonator 32, with the result that a magnetic field space Z2 having a lower magnetic field strength than that other than the inner circumference sides of the power-supplying resonator 22 and the power-receiving resonator 32 is formed.

When a stabilizer circuit 7, a charging circuit 8, a rechargeable battery 9, and the like desired to have less influence of the magnetic field is placed in this magnetic field space Z2, occurrence of Eddy Current attributed to the magnetic field is restrained or prevented. This restrains negative effects due to generation of heat. Further, since the magnetic field space formed in this antiphase resonance mode is formed on the inner circumference side of the power-supplying resonator 22 and the power-receiving resonator 32, assembling the electronic components such as the stabilizer circuit 7, the charging circuit 8, the rechargeable battery 9, and the like within this space makes the power-supplying module 2 and the power-receiving module 3 themselves more compact, and improves the freedom in designing.

(Relation of Input Impedance in Power-Supplying State to Input Impedance in Standby State)

First, the following describes a concept of the power-supplying state and the standby state in the wireless power transmission apparatus 1 used in the present embodiment. As shown in FIG. 1 and FIG. 3, the power-supplying state is a state where power is supplied from the power-supplying module 2 to the power-receiving module 3. This power-supplying state may be expressed as the period in which the power-supplying resonator 22 of the power-supplying module 2 and the power-receiving resonator 32 of the power-receiving module 3 are in a magnetic field resonant state. Further, the power-supplying state is a state where the distance d23 between the power-supplying resonator 22 and the power-receiving resonator 32 is such that the power-supplying resonator 22 and the power-receiving resonator 32 are closely disposed (within the power-suppliable region). The power-supplying state may be perceived as a state in which the above-described magnetic field space (Z1 and Z2) are formed. In the present embodiment, the power-supplying state is a state in which the rechargeable battery 9 in the wireless headset 102 is being charged.

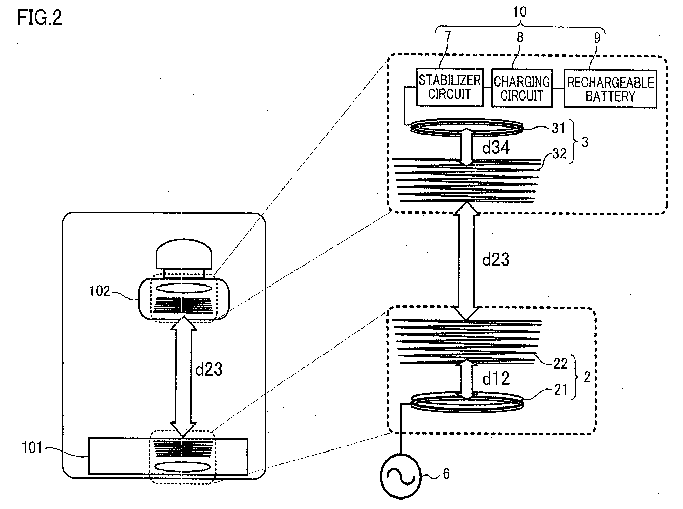

On the other hand, as shown in FIG. 2, the standby state is a state where power is not supplied from the power-supplying module 2 to the power-receiving module 3. This standby state may be expressed as the period in which the power-supplying resonator 22 of the power-supplying module 2 and the power-receiving resonator 32 of the power-receiving module 3 are not in a magnetic field resonant state. Further, the standby state is a state where the distance d23 between the power-supplying resonator 22 and the power-receiving resonator 32 is such that the power-supplying resonator 22 and the power-receiving resonator 32 are disposed so that the magnetic field resonant state does not occur. The standby state may be perceived as a state in which the above-described magnetic field space (Z1 and Z2) are not formed. In the present embodiment, the standby state is a state in which the rechargeable battery 9 in the wireless headset 102 is not being charged.

Next, with the understanding of the above standby state and the power-supplying state, the following describes input impedances in the standby state and the power-supplying state, in relation to the power-supplying module 2 and the power-receiving module 3 for reducing the power consumption in the power-supplying module 2 in the standby state.

First described is the needs of reducing the power consumption in the standby state, in the power transmission by means of the wireless power transmission. To perform wireless power transmission by coupling magnetic fields utilizing resonance phenomenon (magnetic field resonant state) between the power-supplying resonator 22 and the power-receiving resonator 32 of the power-supplying module 2 and the power-receiving module 3, the power-receiving module 3 needs to be brought close to the power-supplying module 2 so that they are within a distance (power-suppliable region) that enables power supplying from the power-supplying module 2 to the power-receiving module 3. In this process of use, power is continuously supplied to the power-supplying module 2, even if the power-supplying module 2 and the power-receiving module 3 are not within the power-suppliable region (standby state), so as to prepare for placement of the power-receiving module 3 within the power-suppliable region (power-supplying state) .

As the result, power consumption in the power-supplying module 2 in the standby state is wasted.

Nonetheless, the power needs to be continuously supplied to the power-supplying module 2 in the standby state so as to enable prompt transition to the power-supplying state, upon closely positioning the power-receiving module 3 in the power-suppliable region.

For this reason, power consumption in the standby state needs to be restrained as compared to that in the power-supplying state.

The power consumption P is calculated from the following (Formula 2). Therefore, to restrain the power consumption in the standby state relative to that in the power-supplying state, it is understood that the value of the input impedance $Z_{in}$ in the standby state is made greater than the value of the input impedance $Z_{in}$ in the power-supplying state. It should be noted that voltage V (effective value) to be applied by the AC power source 6 to the power-supplying module 2 is kept constant. As such the voltage V is not a variable factor.

$$P = \frac{V^2}{\left| Z_{in} \right|}$$

$\ldots\ldots$ (Formula 2)

Therefore, the power-supplying module 2 related to the present embodiment is set so that the input impedance $Z_{in}$ of the power-supplying module 2 in the standby state is greater than the input impedances $Z_{in}$ of the power-supplying module 2 and the power-receiving module 3 in the power-supplying state, and is operated at a power-source frequency such that the input impedance $Z_{in}$ of the power-supplying module 2 in the standby state is greater than the input impedances $Z_{in}$ of the power-supplying module 2 and the power-receiving module 3 in the power-supplying state. With the structure, the input impedance $Z_{in}$ of the power-supplying module 2 in the standby state becomes greater than the input impedances $Z_{in}$ of the power-supplying module 2 and the power-receiving module 3 in the power-supplying state. As the result, power consumption in the power-supplying module 2 in the standby state is made lower than that in the power-supplying state.

Description is provided below with examples. In the following examples, an input impedance $Z_{in}$ with respect to the power-source frequency in the standby state (OFF) and an input impedance $Z_{in}$ with respect to the power-source frequency in the power-supplying state (ON) are measured, using various structures of the power-supplying module 2 and the power-receiving module 3. It should be noted that the measurements were conducted with a variable resister 11 ($R_1$) substituting for the stabilizer circuit 7, the charging circuit 8, and the rechargeable battery 9, in the examples.

Further, the analyses in Example 1-1 to Example 2-3 deal with a case where the transmission characteristic "S21" with respect to the power-source frequency of the power to the power-supplying module 2 and the power-receiving module 3 in the power-supplying state has a double-hump characteristic.

(Example 1-1)

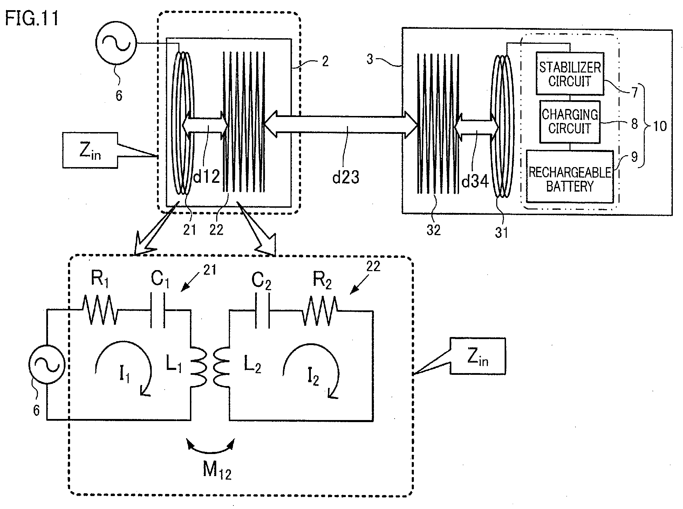

As shown in FIG. 11, a power-supplying module 2 related to Example 1-1 includes a power-supplying coil 21 and a power-supplying resonator 22. On the other hand, the power-receiving module 3 includes a power-receiving resonator 32 and a power-receiving coil 31. The power-supplying coil 21 is constituted by an RLC serial circuit (with resonance) including a resistor $R_1$, a coil $L_1$, and a capacitor $C_1$. The coil $L_1$ part is a solenoid coil formed by winding 18 times a copper wire material (coated by insulation film) having a wire diameter of 0.4 mm$\phi$, with its coil diameter being 15 mm$\phi$. Similarly, the power-receiving coil 31 is constituted by an RLC serial circuit whose elements include a resistor $R_4$, a coil $L_4$, and a capacitor $C_4$. The coil $L_4$ part is a solenoid coil formed by winding 18 times a copper wire material (coated by insulation film) having a wire diameter of 0.4 mm$\phi$, with its coil diameter being 15 mm$\phi$. Further, the power-supplying resonator 22 is constituted by an RLC serial circuit whose elements include a resistor $R_2$, a coil $L_2$, and a capacitor $C_2$. The coil $L_2$ part is a solenoid coil formed by winding 18 times a copper wire material (coated by insulation film) having a wire diameter of 0.4 mm$\phi$, with its coil diameter being 15 mm$\phi$. Further, the power-receiving resonator 32 is constituted by an RLC serial circuit whose elements include a resistor $R_3$, a coil $L_3$, and a capacitor $C_3$. The coil $L_3$ part is a solenoid coil formed by winding 18 times a copper wire material (coated by insulation film) having a wire diameter of 0.4 mm$\phi$, with its coil diameter being 15 mm$\phi$. The values of $R_1$, $R_2$, $R_3$, $R_4$ in Example 1-1 were set to 0.5$\Omega$. Further, the values of $L_1$, $L_2$, $L_3$, $L_4$ were set to 4.5 $\mu$H. The $R_L$ of the power-supplied electronic devices 10 was 100$\Omega$. The resonance frequency of the power-supplying coil 21, the power-supplying resonator 22, and that of the power-receiving coil 31 and the power-receiving resonator 32 were 1.0 MHz. The coupling coefficients $K_{12}$, $K_{23}$, and $K_{34}$ were 0.3 (it should be noted that these are values of coupling coefficients in the power-supplying state).

In the standby state, the input impedance of the power-supplying coil 21 and the power-supplying resonator 22 constituting the power-supplying module 2 was $Z_{in}$, as shown in FIG. 11. In the power-supplying state, the input impedance of the power-supplying coil 21 and the power-supplying resonator 22 constituting the power-supplying module 2 and that of the power-receiving resonator 32 and the power-receiving coil 31 constituting the power-receiving module 3 were $Z_{in}$, as shown in FIG. 3.

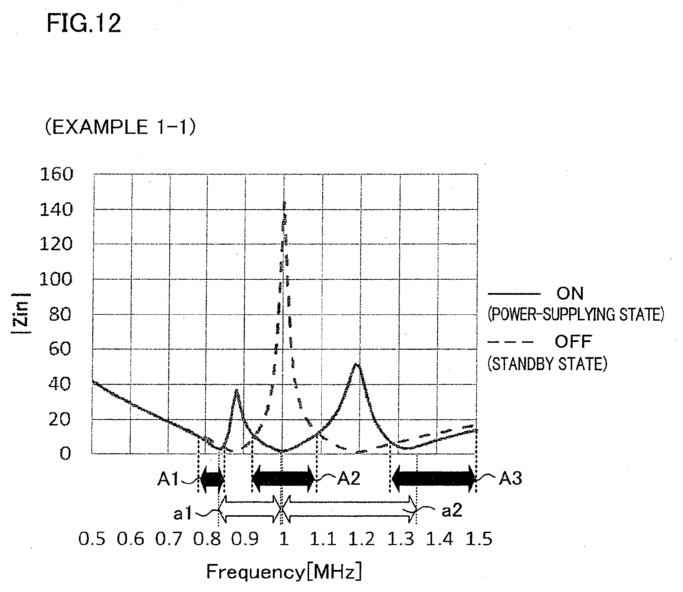

In relation to the power-supplying module 2 and the power-receiving module 3 in Example 1-1, FIG. 12 shows measurement results of the input impedance $Z_{in}$ with respect to the power-source frequency of the power in the standby state (Broken line in FIG. 12) and the input impedance $Z_{in}$ with respect to the power-source frequency of the power in the power-supplying state (solid line in FIG. 12). From this, it is understood that, as a power-source frequency bands such that the input impedance $Z_{in}$ of the power-supplying module 2 in the standby state (broken line in FIG. 12) becomes greater than the input impedance $Z_{in}$ of the power-supplying module 2 and the power-receiving module 3 in the power-supplying state (solid line in FIG. 12), there are three bands; i.e., a band A1 ranging approximately from 0.78 to 0.84 MHz., a band A2 ranging approximately from 0.92 to 1.09 MHz., and a band A3 ranging approximately from 1.28 to 1.5 MHz. (upper measurement limit).

In the present example described above, it is one of obj ects to form a magnetic field space (Z1, Z2) around the power-supplying module 2 and the power-receiving module 3. Specifically, in Example 1-1, the power-source frequency band to be set for formation of the magnetic field space Z1, i.e., the inphase resonance mode in its narrow meaning, is a band a1 ranging from 0.83 MHz. (inclusive) to 1.00 MHz. (exclusive) (See FIG. 12). On the other hand, the power-source frequency band to be set for formation of the magnetic field space Z2, i.e., the antiphase resonance mode in its narrow meaning, is a band a2 ranging from 1.00 MHz. (exclusive) to 1.37 MHz. (inclusive)(See FIG. 12).

From the above, in example 1-1, the power-source frequency bands that result in a greater input impedance $Z_{in}$ of the power-supplying module 2 in the standby state than the input impedance $Z_{in}$ of the power-supplying module 2 and the power-receiving module 3 in the power-supplying state, while enabling formation of the magnetic field space Z1 are the band ranging from 0.83 to 0.84 MHz. , and the band ranging from 0.92 MHz. (inclusive) to 1.00 MHz. (exclusive). Therefore, to form the magnetic field space Z1 using the wireless power transmission apparatus 1 related to Example 1-1, the power-source frequency of the AC power source 6 is set to the band ranging from 0.83 to 0.84 MHz., or the band ranging from 0.92 MHz. (inclusive) to 1.00 MHz. (exclusive). Further, the power-source frequency bands that result in a greater input impedance $Z_{in}$ of the power-supplying module 2 in the standby state than the input impedance $Z_{in}$ of the power-supplying module 2 and the power-receiving module 3 in the power-supplying state, while enabling formation of the magnetic field space Z2 are the band ranging from 1.00 MHz. (exclusive) to 1.09 MHz. (inclusive), and the band ranging from 1.28 MHz. to 1.37 MHz. Therefore, to form the magnetic field space Z2 using the wireless power transmission apparatus 1 related to Example 1-1, the power-source frequency of the AC power source 6 is set to the band ranging from 1.00 MHz. (exclusive) to 1.09 MHz. (inclusive), or the band ranging from 1.28 to 1.37 MHz.

(Example 1-2)

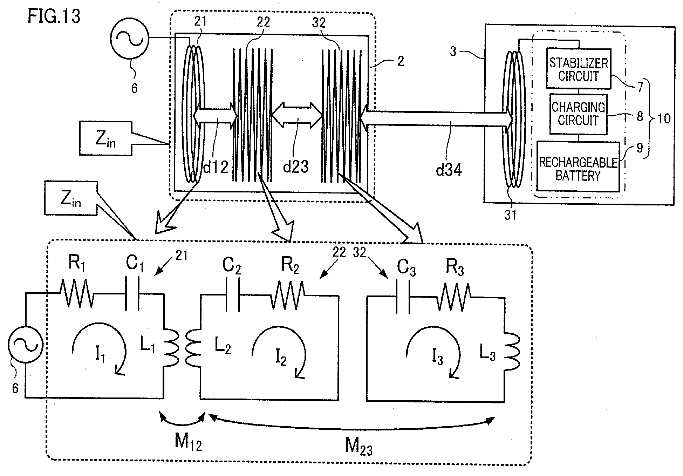

As shown in FIG. 13, a power-supplying module 2 related to Example 1-2 includes a power-supplying coil 21, a power-supplying resonator 22, and a power-receiving resonator 32. On the other hand, the power-receiving module 3 includes a power-receiving coil 31. The structures of the power-supplying coil 21, the power-supplying resonator 22, the power-receiving resonator 32, and the power-receiving coil 31 were the same as those in Example 1-1.

In the standby state, the input impedance of the power-supplying coil 21, the power-supplying resonator 22, and the power-receiving resonator 32 constituting the power-supplying module 2 was $Z_{in}$, as shown in FIG. 13. In the power-supplying state, the input impedance of the power-supplying coil 21, the power-supplying resonator 22, and the power-receiving resonator 32 constituting the power-supplying module 2 and that of the power-receiving coil 31 constituting the power-receiving module 3 were $Z_{in}$, as shown in FIG. 3.

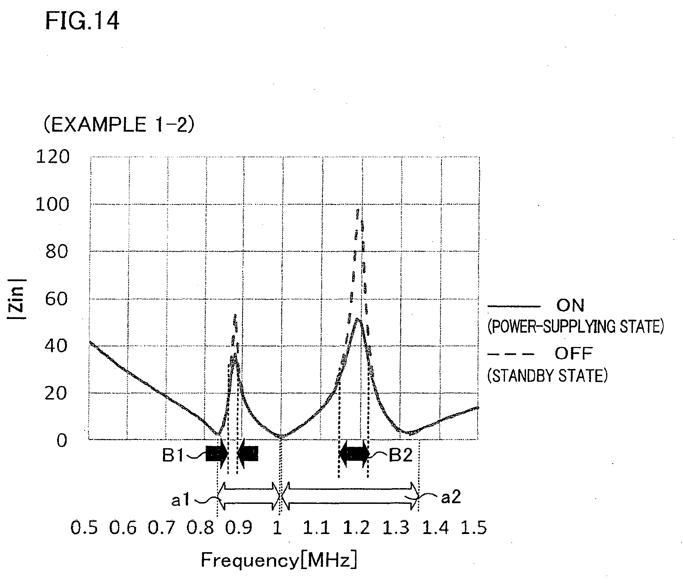

In relation to the power-supplying module 2 and the power-receiving module 3 in Example 1-2, FIG. 14 shows measurement results of the input impedance $Z_{in}$ with respect to the power-source frequency of the power in the standby state (Broken line in FIG. 14) and the input impedance $Z_{in}$ with respect to the power-source frequency of the power in the power-supplying state (solid line in FIG. 14). From this, it is understood that, as a power-source frequency bands such that the input impedance $Z_{in}$ of the power-supplying module 2 in the standby state (broken line in FIG. 14) becomes greater than the input impedance $Z_{in}$ of the power-supplying module 2 and the power-receiving module 3 in the power-supplying state (solid line in FIG. 14), there are two bands; i.e., a band B1 ranging approximately from 0.87 to 0.89 MHz., and a band B2 ranging approximately from 1.14 to 1.22 MHz.

In the present example described above, it is one of objects to form a magnetic field space (Z1, Z2) around the power-supplying module 2 and the power-receiving module 3. In Example 1-2, similarly to Example 1-1, the power-source frequency band to be set for formation of the magnetic field space Z1, i.e., the inphase resonance mode in its narrow meaning, is a band a1 ranging from 0.83 MHz. (inclusive) to 1.00 MHz. (exclusive) (See FIG. 14) . On the other hand, the power-source frequency band to be set for formation of the magnetic field space Z2, i.e., the antiphase resonance mode in its narrow meaning, is a band a2 ranging from 1.00 MHz. (exclusive) to 1.37 MHz. (inclusive)(See FIG. 14).

From the above, in example 1-2, the power-source frequency band that results in a greater input impedance $Z_{in}$ of the power-supplying module 2 in the standby state than the input impedance $Z_{in}$ of the power-supplying module 2 and the power-receiving module 3 in the power-supplying state, while enabling formation of the magnetic field space Z1 is the band ranging from 0.87 to 0.89 MHz. Therefore, to form the magnetic field space Z1 using the wireless power transmission apparatus 1 related to Example 1-2, the power-source frequency of the AC power source 6 is set to the band ranging from 0.87 to 0.89 MHz. Further, the power-source frequency band that results in a greater input impedance $Z_{in}$ of the power-supplying module 2 in the standby state than the input impedance $Z_{in}$ of the power-supplying module 2 and the power-receiving module 3 in the power-supplying state, while enabling formation of the magnetic field space Z2 is the band ranging from 1.14 MHz. to 1.22 MHz. Therefore, to form the magnetic field space Z2 using the wireless power transmission apparatus 1 related to Example 1-2, the power-source frequency of the AC power source 6 is set to the band ranging from 1.14 to 1.22 MHz.

(Example 1-3)

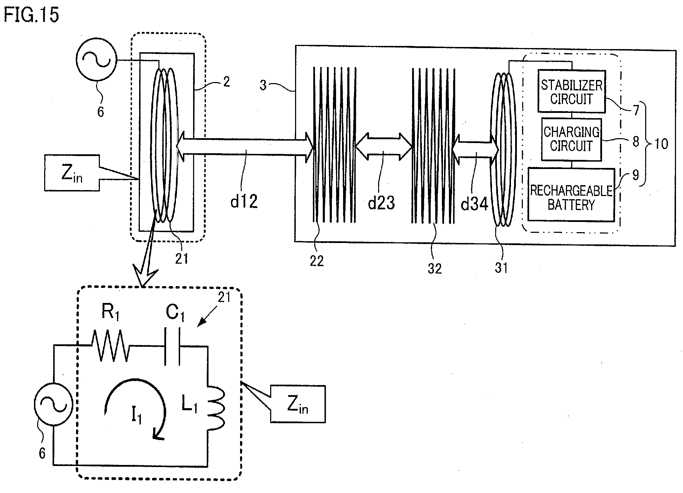

As shown in FIG. 15, a power-supplying module 2 related to Example 1-3 includes a power-supplying coil 21. On the other hand, the power-receiving module 3 includes a power-supplying resonator 22, a power-receiving resonator 32, and a power-receiving coil 31. The structures of the power-supplying coil 21, the power-supplying resonator 22, the power-receiving resonator 32, and the power-receiving coil 31 were the same as those in Example 1-1.

In the standby state, the input impedance of the power-supplying coil 21 constituting the power-supplying module 2 was $Z_{in}$, as shown in FIG. 15. In the power-supplying state, the input impedance of the power-supplying coil 21 constituting the power-supplying module 2 and that of the power-supplying resonator 22, the power-receiving resonator 32, and the power-receiving coil 31 constituting the power-receiving module 3 were $Z_{in}$, as shown in FIG. 3.

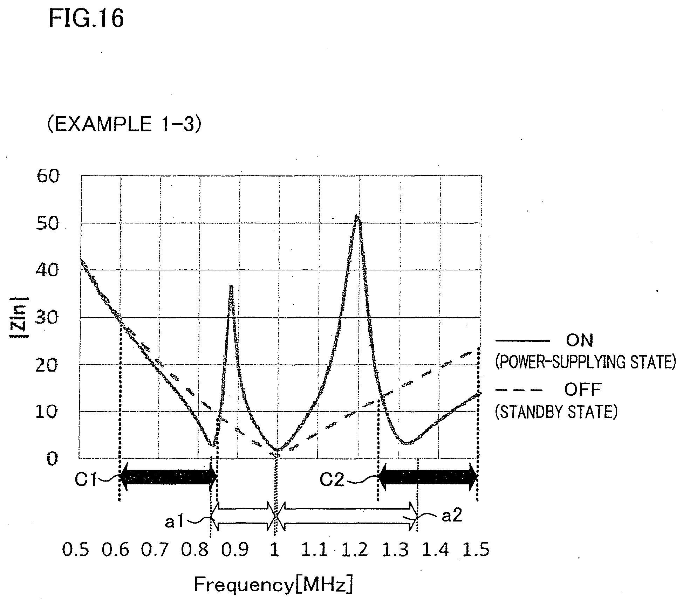

In relation to the power-supplying module 2 and the power-receiving module 3 in Example 1-3, FIG. 16 shows measurement results of the input impedance $Z_{in}$ with respect to the power-source frequency of the power in the standby state (Broken line in FIG. 16) and the input impedance $Z_{in}$ with respect to the power-source frequency of the power in the power-supplying state (solid line in FIG. 16). From this, it is understood that, as a power-source frequency bands such that the input impedance $Z_{in}$ of the power-supplying module 2 in the standby state (broken line in FIG. 16) becomes greater than the input impedance $Z_{in}$ of the power-supplying module 2 and the power-receiving module 3 in the power-supplying state (solid line in FIG. 16), there are two bands; i.e., a band C1 ranging approximately from 0.60 to 0.85 MHz., and a band C2 ranging approximately from 1.25 to 1.5 MHz. (upper measurement limit).

In the present example described above, it is one of objects to form a magnetic field space (Z1, Z2) around the power-supplying module 2 and the power-receiving module 3. In Example 1-3, similarly to Example 1-1, the power-source frequency band to be set for formation of the magnetic field space Z1, i.e. , the inphase resonance mode in its narrow meaning, is a band a1 ranging from 0.83 MHz. (inclusive) to 1.00 MHz. (exclusive) (See FIG. 16) . On the other hand, the power-source frequency band to be set for formation of the magnetic field space Z2, i.e., the antiphase resonance mode in its narrow meaning, is a band a2 ranging from 1.00 MHz. (exclusive) to 1.37 MHz. (inclusive)(See FIG. 16).

From the above, in example 1-3, the power-source frequency band that results in a greater input impedance $Z_{in}$ of the power-supplying module 2 in the standby state than the input impedance $Z_{in}$ of the power-supplying module 2 and the power-receiving module 3 in the power-supplying state, while enabling formation of the magnetic field space Z1 is the band ranging from 0.83 to 0.85 MHz. Therefore, to form the magnetic field space Z1 using the wireless power transmission apparatus 1 related to Example 1-3, the power-source frequency of the AC power source 6 is set to the band ranging from 0.83 to 0.85 MHz. Further, the power-source frequency band that results in a greater input impedance $Z_{in}$ of the power-supplying module 2 in the standby state than the input impedance $Z_{in}$ of the power-supplying module 2 and the power-receiving module 3 in the power-supplying state, while enabling formation of the magnetic field space Z2 is the band ranging from 1.25 MHz. to 1.37 MHz. Therefore, to form the magnetic field space Z2 using the wireless power transmission apparatus 1 related to Example 1-3, the power-source frequency of the AC power source 6 is set to the band ranging from 1.25 to 1.37 MHz.

(Example 2-1)

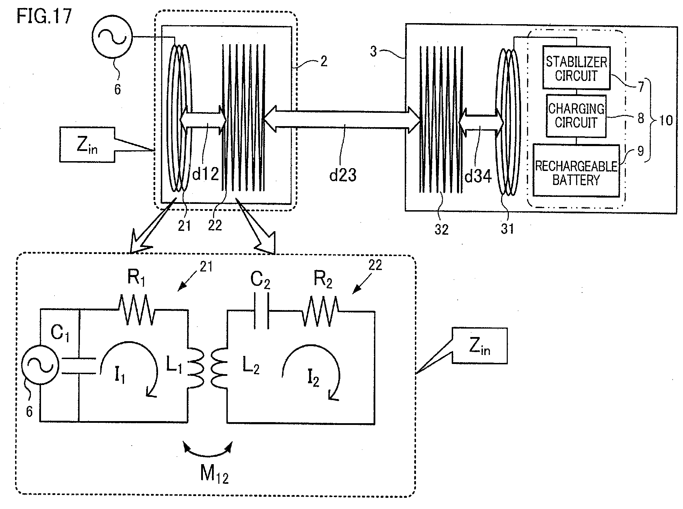

Unlike Example 1-1 to Example 1-3, Example 2-1 to Example 2-3 deal with cases where the capacitor $C_1$ of the RLC circuit (resistor $R_1$, coil $L_1$, capacitor $C_1$) constituting a power-supplying coil 21 in a power-supplying module 2 is connected in parallel, as shown in FIG. 17, FIG. 19, and FIG. 21.

As shown in FIG. 17, a power-supplying module 2 related to Example 2-1 includes a power-supplying coil 21 and a power-supplying resonator 22. On the other hand, the power-receiving module 3 includes a power-receiving resonator 32 and a power-receiving coil 31. The power-supplying coil 21 is constituted by an RLC circuit whose elements include a resistor $R_1$, a coil $L_1$, and a capacitor $C_1$, and the capacitor $C_1$ is connected in parallel as mentioned above. The other structures are the same as those in Example 1-1.

In the standby state, the input impedance of the power-supplying coil 21 and the power-supplying resonator 22 constituting the power-supplying module 2 was $Z_{in}$, as shown in FIG. 17. In the power-supplying state, the input impedance of the power-supplying coil 21, and the power-supplying resonator 22 constituting the power-supplying module 2 and that of the power-receiving resonator 32 and the power-receiving coil 31 constituting the power-receiving module 3 were $Z_{in}$.

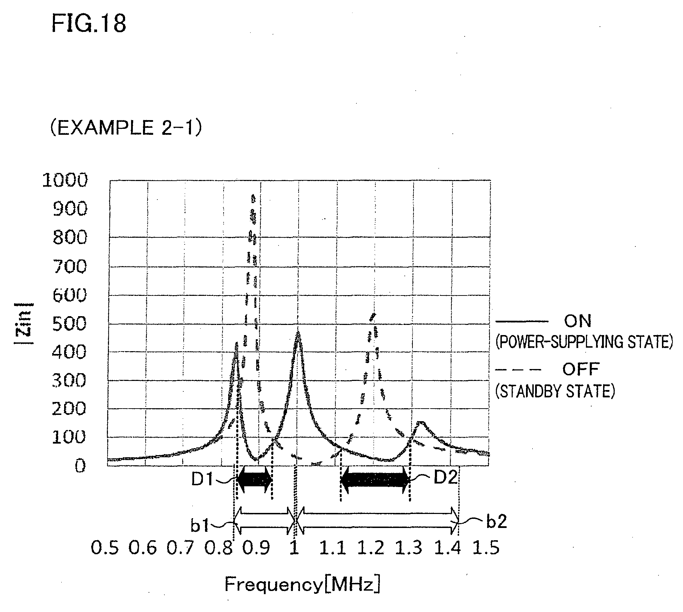

In relation to the power-supplying module 2 and the power-receiving module 3 in Example 2-1, FIG. 18 shows measurement results of the input impedance $Z_{in}$ with respect to the power-source frequency of the power in the standby state (Broken line in FIG. 18) and the input impedance $Z_{in}$ with respect to the power-source frequency of the power in the power-supplying state (solid line in FIG. 18). From this, it is understood that, as a power-source frequency bands such that the input impedance $Z_{in}$ of the power-supplying module 2 in the standby state (broken line in FIG. 18) becomes greater than the input impedance $Z_{in}$ of the power-supplying module 2 and the power-receiving module 3 in the power-supplying state (solid line in FIG. 18), there are two bands; i.e. , a band D1 ranging approximately from 0.84 to 0.93 MHz., and a band D2 ranging approximately from 1.12 to 1.30 MHz.

In the present example described above, it is one of objects to form a magnetic field space (Z1, Z2) around the power-supplying module 2 and the power-receiving module 3. Specifically, in Example 2-1, the power-source frequency band to be set for formation of the magnetic field space Z1, i.e., the inphase resonance mode in its narrow meaning, is a band b1 ranging from 0.83 MHz. (inclusive) to 1.00 MHz. (exclusive) (See FIG. 18). On the other hand, the power-source frequency band to be set for formation of the magnetic field space Z2, i.e., the antiphase resonance mode in its narrow meaning, is a band b2 ranging from 1.00 MHz. (exclusive) to 1.43 MHz. (inclusive)(See FIG. 18).

From the above, in example 2-1, the power-source frequency band that results in a greater input impedance $Z_{in}$ of the power-supplying module 2 in the standby state than the input impedance $Z_{in}$ of the power-supplying module 2 and the power-receiving module 3 in the power-supplying state, while enabling formation of the magnetic field space Z1 is the band ranging from 0.84 to 0.93 MHz. Therefore, to form the magnetic field space Z1 using the wireless power transmission apparatus 1 related to Example 2-1, the power-source frequency of the AC power source 6 is set to the band ranging from 0.84 to 0.93 MHz. Further, the power-source frequency band that results in a greater input impedance $Z_{in}$ of the power-supplying module 2 in the standby state than the input impedance $Z_{in}$ of the power-supplying module 2 and the power-receiving module 3 in the power-supplying state, while enabling formation of the magnetic field space Z2 is the band ranging from 1.12 MHz. to 1.30 MHz. Therefore, to form the magnetic field space Z2 using the wireless power transmission apparatus 1 related to Example 2-1, the power-source frequency of the AC power source 6 is set to the band ranging from 1.12 to 1.30 MHz.

(Example 2-2)

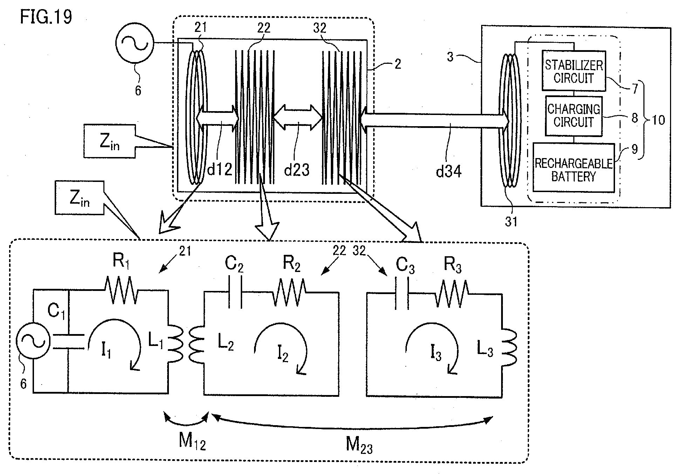

As shown in FIG. 19, a power-supplying module 2 related to Example 2-2 includes a power-supplying coil 21, a power-supplying resonator 22, and a power-receiving resonator 32. On the other hand, the power-receiving module 3 includes a power-receiving coil 31. The structures of the power-supplying coil 21, the power-supplying resonator 22, the power-receiving resonator 32, and the power-receiving coil 31 were the same as those in Example 2-1.

In the standby state, the input impedance of the power-supplying coil 21, the power-supplying resonator 22, and the power-receiving resonator 32 constituting the power-supplying module 2 was $Z_{in}$, as shown in FIG. 19. In the power-supplying state, the input impedance of the power-supplying coil 21, the power-supplying resonator 22, and the power-receiving resonator 32 constituting the power-supplying module 2 and that of the power-receiving coil 31 constituting the power-receiving module 3 were $Z_{in}$.

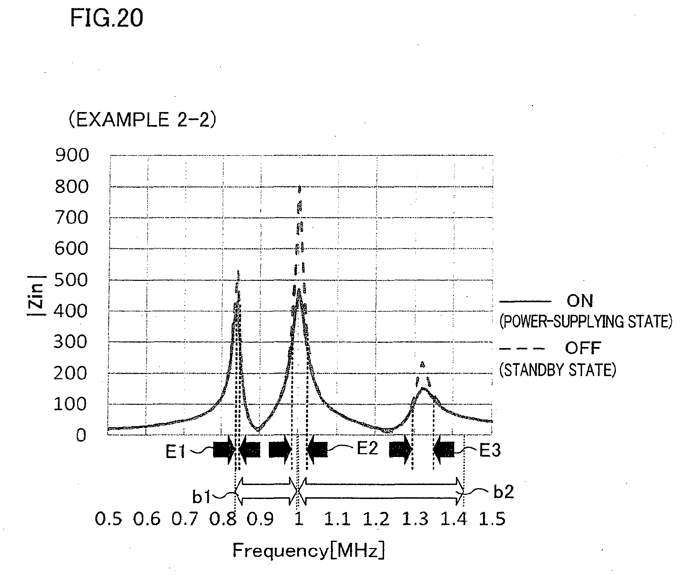

In relation to the power-supplying module 2 and the power-receiving module 3 in Example 2-2, FIG. 20 shows measurement results of the input impedance $Z_{in}$ with respect to the power-source frequency of the power in the standby state (Broken line in FIG. 20) and the input impedance $Z_{in}$ with respect to the power-source frequency of the power in the power-supplying state (solid line in FIG. 20). From this, it is understood that, as a power-source frequency bands such that the input impedance $Z_{in}$ of the power-supplying module 2 in the standby state (broken line in FIG. 20) becomes greater than the input impedance $Z_{in}$ of the power-supplying module 2 and the power-receiving module 3 in the power-supplying state (solid line in FIG. 20), there are three bands; i.e. , a band E1 ranging approximately from 0.83 to 0.84 MHz., a band E2 ranging approximately from 0.98 to 1.02 MHz., and a band E3 ranging approximately from 1.30 to 1.35 MHz.

In the present example described above, it is one of objects to form a magnetic field space (Z1, Z2) around the power-supplying module 2 and the power-receiving module 3. In Example 2-2, similarly to Example 2-1, the power-source frequency band to be set for formation of the magnetic field space Z1, i.e., the inphase resonance mode in its narrow meaning, is a band b1 ranging from 0.83 MHz. (inclusive) to 1.00 MHz. (exclusive) (See FIG. 20) . On the other hand, the power-source frequency band to be set for formation of the magnetic field space Z2, i.e., the antiphase resonance mode in its narrow meaning, is a band b2 ranging from 1.00 MHz. (exclusive) to 1.43 MHz. (inclusive)(See FIG. 20).

From the above, in example 2-2, the power-source frequency bands that result in a greater input impedance $Z_{in}$ of the power-supplying module 2 in the standby state than the input impedance $Z_{in}$ of the power-supplying module 2 and the power-receiving module 3 in the power-supplying state, while enabling formation of the magnetic field space Z1 are the band ranging from 0.83 to 0.84 MHz., and the band ranging from 0.98 MHz. (inclusive) to 1.00 MHz. (exclusive). Therefore, to form the magnetic field space Z1 using the wireless power transmission apparatus 1 related to Example 2-2, the power-source frequency of the AC power source 6 is set to the band ranging from 0.83 to 0.84 MHz., or the band ranging from 0.98 MHz. (inclusive) to 1.00 MHz. (exclusive). Further, the power-source frequency bands that result in a greater input impedance $Z_{in}$ of the power-supplying module 2 in the standby state than the input impedance $Z_{in}$ of the power-supplying module 2 and the power-receiving module 3 in the power-supplying state, while enabling formation of the magnetic field space Z2 are the band ranging from 1.00 MHz. (exclusive) to 1.02 MHz. (inclusive), and the band ranging from 1.30 MHz. to 1.35 MHz. Therefore, to form the magnetic field space Z2 using the wireless power transmission apparatus 1 related to Example 2-2, the power-source frequency of the AC power source 6 is set to the band ranging from 1.00 MHz. (exclusive) to 1.02 MHz. (inclusive), or the band ranging from 1.30 to 1.35 MHz.

(Example 2-3)

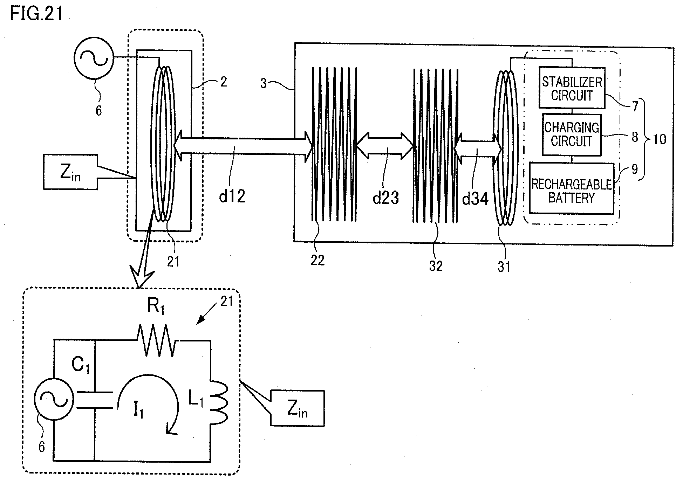

As shown in FIG. 21, a power-supplying module 2 related to Example 2-3 includes a power-supplying coil 21. On the other hand, the power-receiving module 3 includes a power-supplying resonator 22, a power-receiving resonator 32, and a power-receiving coil 31. The structures of the power-supplying coil 21, the power-supplying resonator 22, the power-receiving resonator 32, and the power-receiving coil 31 were the same as those in Example 2-1.

In the standby state, the input impedance of the power-supplying coil 21 constituting the power-supplying module 2 was $Z_{in}$, as shown in FIG. 21. In the power-supplying state, the input impedance of the power-supplying coil 21 constituting the power-supplying module 2 and that of the power-supplying resonator 22, the power-receiving resonator 32, and the power-receiving coil 31 constituting the power-receiving module 3 were $Z_{in}$.

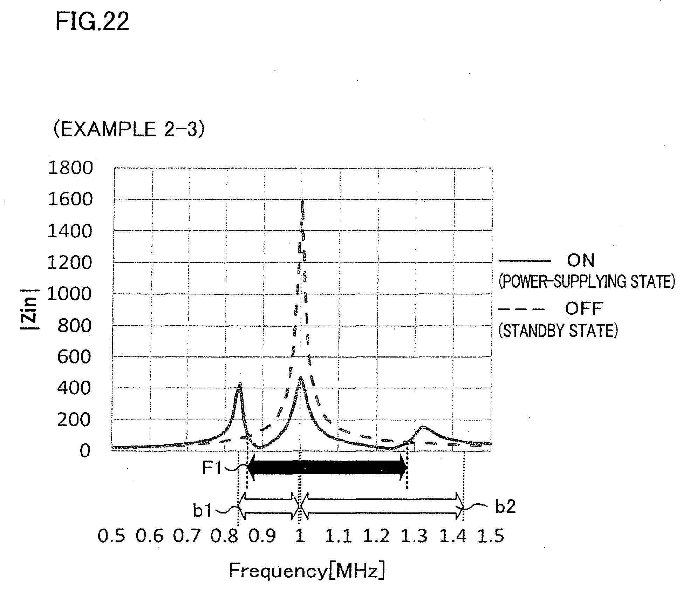

In relation to the power-supplying module 2 and the power-receiving module 3 in Example 2-3, FIG. 22 shows measurement results of the input impedance $Z_{in}$ with respect to the power-source frequency of the power in the standby state (Broken line in FIG. 22) and the input impedance $Z_{in}$ with respect to the power-source frequency of the power in the power-supplying state (solid line in FIG. 22). From this, it is understood that, as a power-source frequency bands such that the input impedance $Z_{in}$ of the power-supplying module 2 in the standby state (broken line in FIG. 22) becomes greater than the input impedance $Z_{in}$ of the power-supplying module 2 and the power-receiving module 3 in the power-supplying state (solid line in FIG. 22), there is a band F1 ranging approximately from 0.86 to 1.28 MHz.

In the present example described above, it is one of objects to form a magnetic field space (Z1, Z2) around the power-supplying module 2 and the power-receiving module 3. In Example 2-3, similarly to Example 2-1, the power-source frequency band to be set for formation of the magnetic field space Z1, i.e., the inphase resonance mode in its narrow meaning, is a band b1 ranging from 0.83 MHz. (inclusive) to 1.00 MHz. (exclusive) (See FIG. 22) . On the other hand, the power-source frequency band to be set for formation of the magnetic field space Z2, i.e., the antiphase resonance mode in its narrow meaning, is a band b2 ranging from 1.00 MHz. (exclusive) to 1.43 MHz. (inclusive)(See FIG. 22).

From the above, in example 2-3, the power-source frequency bands that result in a greater input impedance $Z_{in}$ of the power-supplying module 2 in the standby state than the input impedance $Z_{in}$ of the power-supplying module 2 and the power-receiving module 3 in the power-supplying state, while enabling formation of the magnetic field space Z1 is the band ranging from 0.86 MHz. (inclusive) to 1.00 MHz. (exclusive). Therefore, to form the magnetic field space Z1 using the wireless power transmission apparatus 1 related to Example 2-3, the power-source frequency of the AC power source 6 is set to the band ranging from 0.86 MHz. (inclusive) to 1.00 MHz. (exclusive). Further, the power-source frequency bands that result in a greater input impedance $Z_{in}$ of the power-supplying module 2 in the standby state than the input impedance $Z_{in}$ of the power-supplying module 2 and the power-receiving module 3 in the power-supplying state, while enabling formation of the magnetic field space Z2 is the band ranging from 1.00 MHz. (exclusive) to 1.28 MHz. (inclusive). Therefore, to form the magnetic field space Z2 using the wireless power transmission apparatus 1 related to Example 2-3, the power-source frequency of the AC power source 6 is set to the band ranging from 1.00 MHz. (exclusive) to 1.28 MHz. (inclusive).

As described in Example 1-1 to Example 2-3, in the above structure, the power-receiving resonator 32 is closely positioned to the power-supplying resonator 22 to the extent that the magnetic field occurring around the power-supplying module 2 and the magnetic field occurring around the power-receiving module 3 are able to cancel each other. This enables formation of a magnetic field space Z1 or Z2 in a predetermined position between or around the power-supplying module 2 and the power-receiving module 3, the space having a magnetic field strength smaller than that in positions other than the predetermined position. Consequently, an input impedance $z_{in}$ of the power-supplying module 2 in a standby state in which the magnetic field space Z1 or Z2 is not formed becomes greater than input impedances $Z_{in}$ of the power-supplying module 2 and the power-receiving module 3 in a power-supplying state in which the magnetic field space Z1 or Z2 is formed. As the result, power consumption in the power-supplying module 2 in the standby state is made lower than that in the power-supplying state.

It should be noted that there are following factors (parameters) to set the power-supplying module 2 and the power-receiving module 3 so that the input impedance $Z_{in}$ of the power-supplying module 2 in the standby state is greater than the input impedances $Z_{in}$ of the power-supplying module 2 and the power-receiving module 3 in the power-supplying state. Namely, such a factors include setting values of the resistance value, inductance, capacity of capacitor, the coupling

coefficients $K_{12}$, $K_{23}$, $K_{34}$, and load impedances (load resistance) in the $R_1$, $L_1$, and $C_1$ of the RLC circuit of the power-supplying coil 21, the $R_2$, $L_2$, and $C_2$ of the RLC circuit of the power-supplying resonator 22, the $R_3$, $L_3$, and $C_3$ of the RLC circuit of the power-receiving resonator 32, the $R_4$, $L_4$, $C_4$ of the RLC circuit of the power-receiving coil 31. How the RLC circuits in the power-supplying coil 21, the power-supplying resonator 22, the power-receiving resonator 32, and the power-receiving coil 31, are connected, i.e., serial connection, parallel connection, or the not connecting the capacitor, is also a factor (parameter). The structure of the power-supplying module 2 is another factor (parameter), i.e., what the power-supplying module 2 includes out of power-supplying coil 21, the power-supplying resonator 22, and the power-receiving resonator 32.

In the structure described above, as the power-supplying resonator 22 and the power-receiving resonator 32 are disposed close to each other, the coupling coefficient indicating the strength of coupling between the power-supplying resonator 22 and the power-receiving resonator 32 is increased when power transmission utilizing the resonance phenomenon is performed. When the transmission characteristic "S21" is measured while the coupling coefficient is high, the analyzed waveform has separate peaks; one on a low frequency side and another on a high frequency side (double-hump characteristic).

By setting the power-source frequency of the AC power source 6 to a frequency band (fL) on the low frequency side (inphase resonance mode), the current in the power-supplying resonator 22 and the current in the power-receiving resonator 32 flow in the same direction. With this, as the magnetic field occurring on the outer circumference side of the power-supplying module 2 and the magnetic field occurring on the outer circumference side of the power-receiving module 3 cancel each other out, the influence of the magnetic fields on the outer circumference sides of the power-supplying module 2 and the power-receiving module 3 is restrained, and the magnetic field space Z1 having a smaller magnetic field strength than a magnetic field strength in positions other than the outer circumference sides of the power-supplying module 2 and the power-receiving module 3 is formed. Consequently, an input impedance $Z_{in}$ of the power-supplying module 2 in a standby state in which the magnetic field space Z1 is not formed on the outer circumference sides of the power-supplying module 2 and the power-receiving module 3 becomes greater than input impedances $Z_{in}$ of the power-supplying module 2 and the power-receiving module 3 in a power-supplying state in which the magnetic field space is formed on the outer circumference sides of the power-supplying module 2 and the power-receiving module 3. As the result, power consumption in the power-supplying module 2 in the standby state is made lower than that in the power-supplying state.

In the structure described above, as the power-supplying resonator 22 and the power-receiving resonator 32 are disposed close to each other, the coupling coefficient indicating the strength of coupling between the power-supplying resonator 22 and the power-receiving resonator 32 is increased when power transmission utilizing the resonance phenomenon is performed. When the transmission characteristic "S21" is measured while the coupling coefficient is high, the analyzed waveform has separate peaks; one on a low frequency side and another on a high frequency side (double-hump characteristic).

By setting the power-source frequency of the AC power source 6 to a frequency band (fH) on the high frequency side (antiphase resonance mode), the current in the power-supplying resonator 22 and the current in the power-receiving resonator 32 flow in directions opposite to each other. With this, as the magnetic field occurring on the inner circumference side of the power-supplying module 2 and the magnetic field occurring on the inner circumference side of the power-receiving module 3 cancel each other out, the influence of the magnetic fields on the inner circumference sides of the power-supplying module 2 and the power-receiving module 3 is restrained, and the magnetic field space Z2 having a smaller magnetic field strength than a magnetic field strength in positions other than the inner circumference sides of the power-supplying module 2 and the power-receiving module 3 is formed. Consequently, an input impedance $Z_{in}$ of the power-supplying module 2 in a standby state in which the magnetic field space is not formed on the inner circumference sides of the power-supplying module 2 and the power-receiving module 3 becomes greater than input impedances $z_{in}$ of the power-supplying module 2 and the power-receiving module 3 in a power-supplying state in which the magnetic field space Z2 is formed on the inner circumference sides of the power-supplying module 2 and the power-receiving module 3. As the result, power consumption in the power-supplying module 2 in the standby state is made lower than that in the power-supplying state.

With the structures of Example 1-2 and Example 2-2, the input impedance of the power-supplying module 2 in the standby state is configured as an input impedance $Z_{in}$ of the power-supplying module 2 having the power-supplying coil 21, the power-supplying resonator 22, and the power-receiving resonator 32.

Therefore, the power-supplying module 2 structured by at least the three elements, i.e., the power-supplying coil 21, the power-supplying resonator 22, and the power-receiving resonator 32, has more factors to determine the input impedance $Z_{in}$ of the power-supplying module 2. An increase in the number of factors to determine the input impedance $Z_{in}$ of the power-supplying module 2 means an increase in the number of factors to determine the relation of the input impedance $Z_{in}$ of the power-supplying module 2 to the power-source frequency of the AC power source 6, and hence a higher freedom is achieved in designing the power-supplying module 2.

Further, the power-receiving module 3 including a power-receiving coil 31 is made compact.

With the structures of Example 1-1 and Example 2-1, the input impedance $Z_{in}$ of the power-supplying module 2 in the standby state is configured as an input impedance $Z_{in}$ of the power-supplying module 2 having the power-supplying coil 21 and the power-supplying resonator 22.

Therefore, the power-supplying module 2 structured by at least the two elements, i.e., the power-supplying coil 21 and the power-supplying resonator 22, has more factors to determine the input impedance $Z_{in}$ of the power-supplying module 2. An increase in the number of factors to determine the input impedance $Z_{in}$ of the power-supplying module 2 means an increase in the number of factors to determine the relation of the input impedance $Z_{in}$ of the power-supplying module 2 to the power-source frequency of the AC power source 6, and hence a higher freedom is achieved in designing the power-supplying module 2.

Further, the power-receiving module 3 including a power-receiving resonator 32 and a power-receiving coil 31 is made compact.

With the structures of Example 1-3 and Example 2-3, the input impedance $Z_{in}$ of the power-supplying module 2 in the standby state is configured as an input impedance $Z_{in}$ of the power-supplying coil 21.

Therefore, in the power-supplying module 2 structured essentially by a single element, i.e., the power-supplying coil 21, the factors to determine the input impedance $Z_{in}$ of the power-supplying module 2 is simplified to one. Being able to simplify the factors to determine the input impedance $Z_{in}$ of the power-supplying module 2 to one factor means that the factors to determine the relation of the input impedance $Z_{in}$ of the power-supplying module 2 to the power-source frequency of the AC power source 6 are simplified to one, and hence designing of the power-supplying module 2 is made simple.

(Design Method)

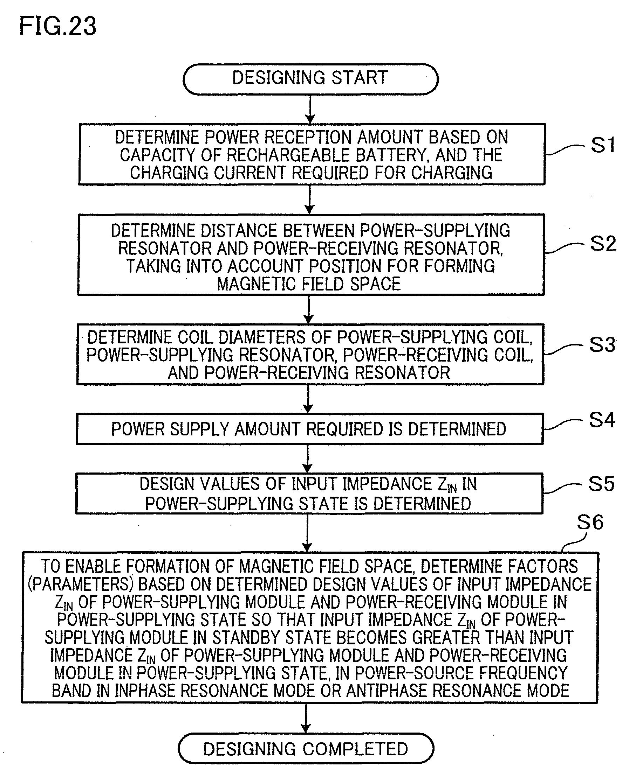

Next, the following describes with reference to FIG. 23 a design method (adjustment) which is a part of manufacturing process of the power-supplying module 2 and the power-receiving module 3.

A design method described here is the charger 101 having the power-supplying module 2 and the wireless headset 102 having the power-receiving module 3, shown in FIG. 1.

First, as shown in FIG. 23, a power reception amount in the power-receiving module 3 is determined based on the capacity of the rechargeable battery 9, and the charging current required for charging the rechargeable battery 9 (S1).

Next, the distance between the power-supplying resonator 22 and the power-receiving resonator 32 is determined (S2). The distance is the distance d23 between the power-supplying resonator 22 and the power-receiving resonator 32, while the wireless headset 102 having therein the power-receiving module 3 is placed on the charger 101 having therein the power-supplying module 2, i.e., in the power-supplying state. In the present exemplary designing, the stabilizer circuit 7, the charging circuit 8, and the rechargeable battery 9 are disposed on the inner circumference side of the solenoid power-receiving coil 31 and the power-receiving resonator 32. Therefore, the magnetic field space Z2 needs to be formed on the inner circumference side of the power-receiving resonator 32. For this reason, the position for forming the magnetic field space Z2 is taken into account when determining the distance d23 between the power-supplying resonator 22 and the power-receiving resonator 32. It should be noted that the shapes and structures of the wireless headset 102 and the charger 101 are also taken into account when determining the distance d23.

Further, based on the sizes, the shapes and the structures of the wireless headset 102 and the charger 101, the coil diameters of the power-supplying coil 21, the power-supplying resonator 22, and the power-receiving coil 31, and the power-receiving resonator 32 are determined (S3).

Through the steps of S2 to S3, the coupling coefficient $K_{23}$ and the power transmission efficiency between the power-supplying resonator 22 (coil $L_2$) and the power-receiving resonator 32 (coil $L_3$) are determined.

Based on the power reception amount in the power-receiving module 3 determined in S1 and on the power transmission efficiency determined through S2 to S3, the minimum power supply amount required for the power-supplying module 2 is determined (S4).

Then, a range of the design values of the input impedance $Z_{in}$ of the power-supplying module 2 and the power-receiving module 3 in the power-supplying state is determined, taking into account the power reception amount in the power-receiving module 3, the power transmission efficiency, and the minimum power supply amount required to the power-supplying module 2 (S5).

In the present exemplary designing, as described above, to enable formation of the magnetic field space Z2, each factor (parameter) is determined based on the design values of the input impedance $Z_{in}$ of the power-supplying module 2 and the power-receiving module 3 in the power-supplying state, which are determined in S5, so that the input impedance $Z_{in}$ of the power-supplying module 2 in the standby state becomes greater than the input impedance $Z_{in}$ of the power-supplying module 2 and the power-receiving module 3 in the power-supplying state, in the power-source frequency band in the antiphase resonance mode. Specifically, there are following factors (parameters) to set the power-supplying module 2 and the power-receiving module 3 so that the input impedance $Z_{in}$ of the power-supplying module 2 in the standby state is greater than the input impedances $Z_{in}$ of the power-supplying module 2 and the power-receiving module 3 in the power-supplying state. Namely, such a factors include setting values of the resistance value, inductance, capacity of capacitor, the coupling coefficients $K_{12}$, $K_{23}$, $K_{34}$, and load impedances (load resistance) in the $R_1$, $L_1$, and $C_1$ of the RLC circuit of the power-supplying coil 21, the $R_2$, $L_2$, and $C_2$ of the RLC circuit of the power-supplying resonator 22, the $R_3$, $L_3$, and $C_3$ of the RLC circuit of the power-receiving resonator 32, the $R_4$, $L_4$, $C_4$ of the RLC circuit of the power-receiving coil 31. How the RLC circuits in the power-supplying coil 21, the power-supplying resonator 22, the power-receiving resonator 32, and the power-receiving coil 31, are connected, i.e., serial connection, parallel connection, or the not connecting the capacitor, is also a factor (parameter) . The structure of the power-supplying module 2 is another factor (parameter), i.e., what the power-supplying module 2 includes out of power-supplying coil 21, the power-supplying resonator 22, and the power-receiving resonator 32.

With the method described above, an input impedance $Z_{in}$ of the power-supplying module 2 in a standby state in which the magnetic field space Z2 is not formed becomes greater than input impedances $Z_{in}$ of the power-supplying module 2 and the power-receiving module 3 in a power-supplying state in which the magnetic field space Z2 is formed. As the result, power consumption in the power-supplying module 2 in the standby state is made lower than that in the power-supplying state.

(Other Embodiments)

Although the above description deals with a wireless headset 102 as an example, the method is applicable to any devices having a rechargeable battery; e.g., tablet PCs, digital cameras, mobile phones, earphone-type music player, hearing aids, and sound collectors.

Further, in the above description, the power-receiving module 3 is a power-supplied electronic device 10 having a rechargeable battery 9; however, it is possible to adopt, as the power-supplied electronic devices 10, a machine that directly consumes power for its operation.

Further, although the above description assumes the power-supplying module 2 and the power-receiving module 3 are mounted in a portable electronic device, the use of such an apparatus is not limited to small devices. For example, with a modification to the specifications according to the required power amount, the power-supplying module 2 and the power-receiving module 3 are mountable to a relatively large system such as a wireless charging system in an electronic vehicle (EV), or to an even smaller device such as a wireless endoscope for medical use.

(Changing Size of Magnetic Field Space)

Further, the above embodiment described that formation of magnetic field space Z1 or Z2 is possible. It should be noted that it is further possible to change the size of the magnetic field space Z1 or Z2.

To change the size of the magnetic field space Z1 or Z2, the degree of coupling (magnetic coupling) between the magnetic field of the power-supplying resonator 22 and the magnetic field of the power-receiving resonator 32 is changed. To change the degree of magnetic coupling, adjustable parameters of the power-supplying coil 21 and the power-supplying resonator 22 in the power-supplying module 2 and the power-receiving coil 31 and the power-receiving resonator 32 in the power-receiving module 3 are changed. Specific examples of the adjustable parameters include a positional relationship between the power-supplying coil 21 and the power-supplying resonator 22 in the power-supplying module 2, a positional relationship between the power-receiving coil 31 and the power-receiving resonator 32 in the power-receiving module 3, the magnitude of the power supplied to the power-supplying module 2, the capacity and inductance of each device (e.g. , a capacitor and a coil) of the power-supplying resonator 22 and of the power-receiving resonator 32, and-the frequency of the power supplied to the power-supplying module 2.

According to the method above, as the degree of the magnetic coupling between the power-supplying resonator 22 and the power-receiving resonator 32 is changed by changing the adjustable parameters regarding the power-supplying coil 21 and the power-supplying resonator 22 and the power-receiving coil 31 and the power-receiving resonator 32, the size of the magnetic field space (Z1 or Z2) is changed. For example, the magnetic field space (Z1 or Z2) is expanded by relatively weakening the magnetic coupling occurring between the power-supplying resonator 22 and the power-receiving resonator 32. On the other hand, the magnetic field space (Z1 or Z2) is made smaller by relatively strengthening the magnetic coupling occurring between the power-supplying resonator 22 and the power-receiving resonator 32.

(Changing Shape of Magnetic field space)

Further, the above embodiment described that formation of magnetic field space Z1 or Z2 is possible. It should be noted that it is further possible to change the size of the magnetic field space Z1 or Z2. This is described below.

To change the shape of the magnetic field space, for example, the degree of coupling (magnetic coupling) of magnetic fields between or around the power-supplying coil 21, the power-supplying resonator 22, and magnetic fields between or around the power-receiving resonator 32 and the power-receiving coil 31 is changed. To cause a change in the magnetic coupling, the shapes of coils of the power-supplying coil 21, the power-supplying resonator 22, the power-receiving coil 31, and the power-receiving resonator 32 are changed.

According to the method above, by causing the power-supplying coil 21 and the power-supplying resonator 22 and the power-receiving coil 31 and the power-receiving resonator 32 to have desired shapes, a magnetic field space having a relatively low magnetic field strength is formed with a desired shape corresponding to the shapes of the power-supplying coil 21 and the power-supplying resonator 22 and the power-receiving coil 31 and the power-receiving resonator 32. That is to say, by changing the shapes of the power-supplying coil 21 and the power-supplying resonator 22 and the power-receiving coil 31 and the power-receiving resonator 32 of the power-receiving module 3, it is possible to change the shape of the magnetic field space Z having a relatively low magnetic field strength.

Although the above descriptions have been provided with regard to the characteristic parts so as to understand the present invention more easily, the invention is not limited to the embodiments and the examples as described above and can be applied to the other embodiments and examples, and the applicable scope should be construed as broadly as possible. Furthermore, the terms and phraseology used in the specification have been used to correctly illustrate the present invention, not to limit it. In addition, it will be understood by those skilled in the art that the other structures, systems, methods and the like included in the spirit of the present invention can be easily derived from the spirit of the invention described in the specification. Accordingly, it should be considered that the present invention covers equivalent structures thereof without departing from the spirit and scope of the invention as defined in the following claims. In addition, it is required to sufficiently refer to the documents that have been already disclosed, so as to fully understand the objects and effects of the present invention.

REFERENCE SIGNS LIST

2: Power-Supplying Module
3: Power-Receiving Module
6: AC power source
7: Stabilizer Circuit
8: Charging Circuit
9: Rechargeable Battery
10: Power-Supplied Electronic Device
11: Variable Resistor
21: Power-Supplying Coil
22: Power-Supplying Resonator
31: Power-Receiving Coil
32: Power-Receiving Resonator
102: Wireless Headset
101: Charger
110: Network Analyzer
Z1, Z2: Magnetic Field Space

**Claims**

1. A wireless power transmission apparatus, wherein power is supplied from a power-supplying module connected to a power source to a power-receiving module closely disposed to the power-supplying module using resonance phenomenon, while having a magnetic field occurring around the power-supplying module and a magnetic field occurring around the power-receiving module cancel each other so as to form, in a predetermined position between or around the power-supplying module and the power-receiving module a magnetic field space having a smaller magnetic field strength than that in positions other than the predetermined position; and
the wireless power transmission apparatus is operated at a power-source frequency of the power source such that an input impedance of the power-supplying module in a standby state in which the magnetic field space is not formed is greater than input impedances of the power-supplying module and the power-receiving module in a power-supplying state in which the magnetic field space is formed and power is supplied to the power-receiving module.

2. The wireless power transmission apparatus according to claim 1, wherein
the power-supplying module and the power-receiving module respectively comprise at least a power-supplying resonator and a power-receiving resonator which resonate with each other at a predetermined resonance frequency; and

when power is supplied from the power-supplying resonator to the power-receiving resonator by means of resonance phenomenon, the power-source frequency of the power source is set on a low frequency side of the resonance frequency so that the current in the power-supplying resonator and the current in the power-power-receiving resonator flow in the same direction.

3. The wireless power transmission apparatus according to claim 1, wherein
the power-supplying module and the power-receiving module respectively comprise at least a power-supplying resonator and a power-receiving resonator which resonate with each other at a predetermined resonance frequency; and

when power is supplied from the power-supplying resonator to the power-receiving resonator by means of resonance phenomenon, the power-source frequency of the power source is set on a high frequency side of the resonance frequency so that the current in the power-supplying resonator and the current in the power-power-receiving resonator flow in directions opposite to each other.

4. The wireless power transmission apparatus according to claim 2 or 3, wherein
the power-supplying module comprises a power-supplying coil, a power-supplying resonator, and a power-receiving resonator, and
the power-receiving module comprises a power-receiving coil.

5. The wireless power transmission apparatus according to claim 2 or 3, wherein
the power-supplying module comprises a power-supplying coil and a power-supplying resonator, and
the power-receiving module comprises a power-receiving resonator and a power-receiving coil.

6. The wireless power transmission apparatus according to claim 2 or 3, wherein
the power-supplying module comprises a power-supplying coil,
and
the power-receiving module comprises a power-supplying resonator, a power-receiving resonator, and a power-receiving coil.

7. A power-supplying method for a wireless power transmission apparatus, wherein power is supplied from a power-supplying module connected to a power source to a power-receiving module closely disposed to the power-supplying module using resonance phenomenon, while having a magnetic field occurring around the power-supplying module and a magnetic field occurring around the power-receiving module cancel each other so as to form, in a predetermined position between or around the power-supplying module and the power-receiving module a magnetic field space having a smaller magnetic field strength than that in positions other than the predetermined position, the method comprising
adjusting a power-source frequency of the power source to a band such that an input impedance of the power-supplying module in a standby state in which the magnetic field space is not formed becomes greater than input impedances of the power-supplying module and the power-receiving module in a power-supplying state in which the magnetic field space is formed and power is supplied to the power-receiving module.

FIG.1

FIG.2

FIG.3

FIG.4

STABILIZER
CIRCUIT
7

CHARGING
CIRCUIT
8

10

RECHARGEABLE
BATTERY
9

21 22
2

32 31
3

Z1

Z2

FIG.5

FIG.6

FIG.7(A)

FIG.7(B)

F IG .8 (A )

ANTIPHASE RESONANCE MODE (NARROWEST MEANING)

F IG .8 (B )

ANTIPHASE RESONANCE MODE (NARROWEST MEANING)
(A-ACROSS SECTION)

FIG.9(A)

FIG.9(B)

## F IG .10 (A )

ANTIPHASE RESONANCE MODE (NARROWEST MEANING)

## F IG .10 (B )

ANTIPHASE RESONANCE MODE (NARROWEST MEANING)
(B-BCROSS SECTION)

FIG.11

STABILIZER CIRCUIT — 7

CHARGING CIRCUIT — 8

RECHARGEABLE BATTERY — 9

10

$Z_{in}$

$d12$   21   22

$d23$

$d34$   32   31

2   3

6

$R_1$   $C_1$   21   $C_2$   $R_2$   22

$I_1$   $L_1$   $L_2$   $I_2$

6

$Z_{in}$

$M_{12}$

FIG.12

(EXAMPLE 1-1)

FIG.13

FIG.14

(EXAMPLE 1-2)

FIG.15

FIG.16

(EXAMPLE 1-3)

FIG.17

$Z_{in}$

$Z_{in}$

$M_{12}$

FIG.18

(EXAMPLE 2-1)

FIG.19

FIG.20

(EXAMPLE 2-2)

FIG.21

# FIG.22

(EXAMPLE 2-3)

# FIG.23

DESIGNING START

DETERMINE POWER RECEPTION AMOUNT BASED ON
CAPACITY OF RECHARGEABLE BATTERY, AND THE
CHARGING CURRENT REQUIRED FOR CHARGING — S1

DETERMINE DISTANCE BETWEEN POWER-SUPPLYING
RESONATOR AND POWER-RECEIVING RESONATOR,
TAKING INTO ACCOUNT POSITION FOR FORMING
MAGNETIC FIELD SPACE — S2

DETERMINE COIL DIAMETERS OF POWER-SUPPLYING COIL,
POWER-SUPPLYING RESONATOR, POWER-RECEIVING COIL,
AND POWER-RECEIVING RESONATOR — S3

POWER SUPPLY AMOUNT REQUIRED IS DETERMINED — S4

DESIGN VALUES OF INPUT IMPEDANCE $Z_{IN}$ IN
POWER-SUPPLYING STATE IS DETERMINED — S5

S6

TO ENABLE FORMATION OF MAGNETIC FIELD SPACE, DETERMINE FACTORS
(PARAMETERS) BASED ON DETERMINED DESIGN VALUES OF INPUT IMPEDANCE
$Z_{IN}$ OF POWER-SUPPLYING MODULE AND POWER-RECEIVING MODULE IN
POWER-SUPPLYING STATE SO THAT INPUT IMPEDANCE $Z_{IN}$ OF POWER-
SUPPLYING MODULE IN STANDBY STATE BECOMES GREATER THAN INPUT
IMPEDANCE $Z_{IN}$ OF POWER-SUPPLYING MODULE AND POWER-RECEIVING
MODULE IN POWER-SUPPLYING STATE, IN POWER-SOURCE FREQUENCY
BAND IN INPHASE RESONANCE MODE OR ANTIPHASE RESONANCE MODE

DESIGNING COMPLETED

## INTERNATIONAL SEARCH REPORT

| International application No. |
| --- |
| PCT/JP2014/064147 |

A. CLASSIFICATION OF SUBJECT MATTER
*H02J17/00*(2006.01)i

According to International Patent Classification (IPC) or to both national classification and IPC

B. FIELDS SEARCHED

Minimum documentation searched (classification system followed by classification symbols)
H02J17/00

Documentation searched other than minimum documentation to the extent that such documents are included in the fields searched

| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2011-147213 A (Toyota Motor Corp.),<br>28 July 2011 (28.07.2011),<br>paragraphs [0007] to [0013], [0019], [0053],<br>[0065], [0078] to [0079], [0108] to [0109]<br>& US 2012/0326499 A1 & WO 2011/086445 A2<br>& CN 102712267 A | 1-7 |
| A | JP 2012-178916 A (Universal Device Technology<br>Co., Ltd.),<br>13 September 2012 (13.09.2012),<br>paragraphs [0021] to [0027]<br>(Family: none) | 1-7 |

☒ Further documents are listed in the continuation of Box C.    ☐ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 05 August, 2014 (05.08.14) | 19 August, 2014 (19.08.14) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

## INTERNATIONAL SEARCH REPORT

| International application No. |
| --- |
| PCT/JP2014/064147 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2012/132841 A1 (Sony Corp.),<br>04 October 2012 (04.10.2012),<br>paragraphs [0073] to [0074], [0090], [0097];<br>fig. 12, 16(B), 18(A)<br>& US 2014/0008974 A1    & EP 2693601 A1<br>& CN 102738908 A       & CN 202602379 U<br>& TW 201251258 A | 1-7 |

Form PCT/ISA/210 (continuation of second sheet) (July 2009)

**EP 3 010 115 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010239769 A

- JP 2013062895 A